(19)

Europäisches Patentamt

European Patent Office

Office européen des brevets

(11) **EP 0 934 791 B1**

(12) **EUROPEAN PATENT SPECIFICATION**

(45) Date of publication and mention
of the grant of the patent:
**02.04.2008 Bulletin 2008/14**

(51) Int Cl.:
***B23H 7/04*** *(2006.01)*

(21) Application number: **99300856.4**

(22) Date of filing: **05.02.1999**

(54) **Controller of wire electric discharge machine**

Steuerung für eine elektische Drahtschnitt-Entladungsmaschine

Commande pour l'usinage à décharge électrique par fil de coupe

(84) Designated Contracting States:
**CH LI**

(30) Priority: **05.02.1998 JP 3794298**
**04.06.1998 JP 17051198**

(43) Date of publication of application:
**11.08.1999 Bulletin 1999/32**

(73) Proprietor: **FANUC LTD**
**Minamitsuru-gun,**
**Yamanashi 401-0597 (JP)**

(72) Inventors:
• **Kamiguchi, Masao**
**Minamitsuru-gun,**
**Yamanashi 401-0301 (JP)**
• **Hiraga, Kaoru,**
**10-106, Fanuc Manshonharimomi**
**Minamitsuru-gun,**
**Yamanashi 401-0511 (JP)**

• **Kurihara, Masaki**
**Tokyo 158-0083 (JP)**

(74) Representative: **Billington, Lawrence Emlyn et al**
**Haseltine Lake**
**5th fl. Lincoln House**
**300 High Holborn**
**London WC1V 7JH (GB)**

(56) References cited:
**EP-A1- 0 623 860     EP-A2- 0 663 257**
**US-A- 4 366 359      US-A- 5 362 936**

• **PATENT ABSTRACTS OF JAPAN vol. 012, no. 061 (M-671), 24 February 1988 (1988-02-24) & JP 62 208829 A (MITSUBISHI ELECTRIC CORP), 14 September 1987 (1987-09-14)**
• **PATENT ABSTRACTS OF JAPAN vol. 1998, no. 03, 27 February 1998 (1998-02-27) & JP 09 290328 A (MITSUBISHI ELECTRIC CORP), 11 November 1997 (1997-11-11)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

1. Field of the Invention

The present invention relates to an improvement in a wire electric discharge machine, and particularly to a controller of a wire electric discharge machine capable of monitoring a change in thickness of a workpiece and a change in machining current density and also improving a machining performance on a workpiece whose thickness varies.

2. Description of the Related Art

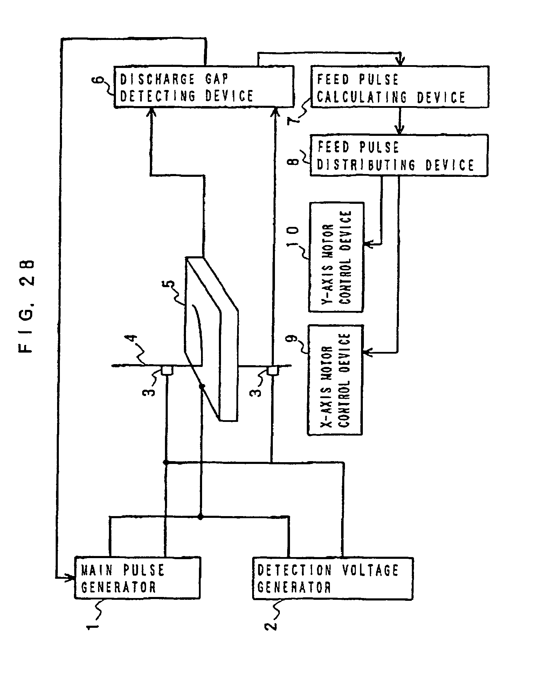

FIG. 28 shows an outline of a conventional wire electric discharge machine. A main pulse generator 1 is constituted by a direct current power source, a circuit comprising switching elements such as transistors and a circuit charging and discharging a capacitor for applying voltage to a gap between a wire electrode 4 and a workpiece 5 to carry out electric discharge machining. A detection voltage generator 2 is constituted by a circuit comprising active elements such as transistors, resistors and capacitors and a direct current power source for applying a pulse voltage (a voltage lower than main pulse voltage) between the wire electrode 4 and the workpiece 5 for detecting whether a discharge takes place across the gap between the wire electrode 4 and the workpiece 5 (i.e., whether the gap is in a dischargeable state).

Conductive brushes 3 are for conducting electricity to the wire electrode 4 and connected to terminals of the main pulse generator 1 and the detection voltage generator 2 on one side. Further, the workpiece 5 is connected to terminals of the main pulse generator 1 and the detection voltage generator 2 on the other side, and the pulse voltage is applied from the main pulse generator 1 or the detection voltage generator 2 between the traveling wire electrode 4 and the workpiece 5.

A discharge gap detecting device 6 is connected to the workpiece 5 and the wire electrode 4, which determines whether the discharge gap is brought into a dischargeable state based on lowering of the detection pulse voltage, and outputs a signal for servo feed to a feed pulse calculating device 7 upon this determination. The feed pulse calculating device 7 produces a series of pulses at a feed pulse interval controlled such that an average voltage in the gap becomes constant, to optimise the repetition rate of discharges based on the signal for servo feed, and outputs the series of pulses to a feed pulse distributing device 8. The feed pulse distributing device 8 allocates the series of pulses as drive pulses of an X-axisor a Y-axis based on a machining program and outputs the drive pulses to an X-axis motor control device 9 and a Y-axis motor control device 10 for driving a table bearing the workpiece 5.

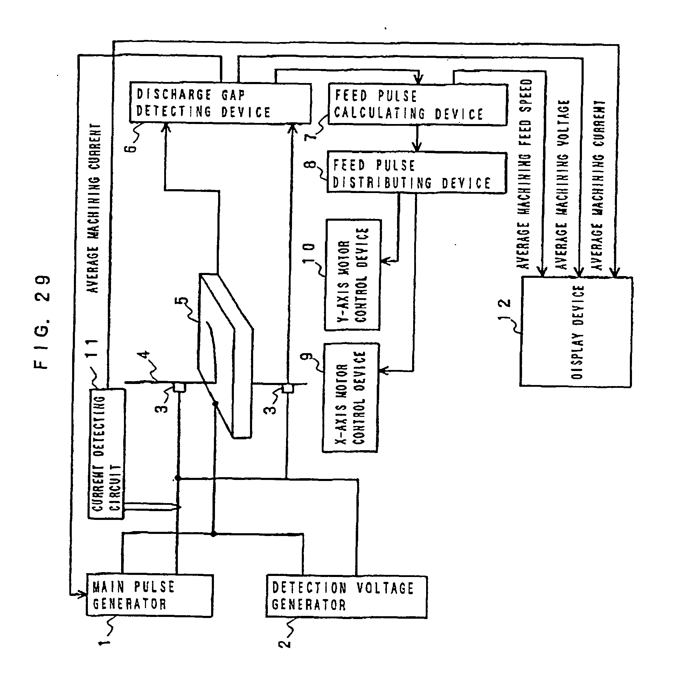

Further, in a conventional wire electric discharge machine shown by FIG. 29, a current detecting circuit 11 detects a main pulse current and outputs an average machining current value in a predetermined time period. A display device 12 displays the average machining current outputted from the current detecting circuit 11, an average machining voltage outputted from the discharge gap detecting device 6, and a feed speed outputted from the feed pulse calculating device 7, respectively, by receiving numerical or level data.

In operation of such a wire electric discharge machine, in order to detect whether electricity can be discharged between the workpiece 5 and the wire electrode 4, the detection pulse voltage is generated from the detection voltage generator 2 and is applied to the gap between the workpiece 5 and the wire electrode 4. When electricity is conducted between the workpiece 5 and the wire electrode 4, causing a voltage drop between the workpiece 5 and the wire electrode 4, the discharge gap detecting device 6 detects the voltage drop, determines that electricity can be discharged, transmits a main pulse applying signal to the main pulse generator 1 to thereby generate a main pulse from the main pulse generator 1 and causes main pulse current (discharge machining current) to flow in the gap between the workpiece 5 and the wire electrode 4. Thereafter, the discharge gap detecting device 6 applies another detection pulse to the gap after elapse of a pertinent pause time period for cooling the gap. The discharge machining is carried out by repeatedly executing the above operational cycle.

As discharges are repeated, the feed pulse calculating device 7 produces a series of pulses the feed pulse interval of which is normally controlled such that the average voltage across the gap becomes constant, in order to optimize repetition of discharges at the gap by the discharge gap detecting device 6 and the feed pulse calculating device 7. The feed pulse distributing device 8 distributes the series of pulses into drive pulses for an X-axis and Y-axis based on a machining program, outputs the drive pulses respectively to the X-axis motor control device 9 and the Y-axis motor control device 10, to drive a table upon which the workpiece 5 is mounted and carry out machining instructed by the machining program on the workpiece 5.

Further, in the conventional wire electric discharge machine of FIG. 29, the average machining current detected by the current detecting circuit 11, the average machining voltage detected by the discharge gap detecting device 6 and the feed speed calculated by the feed pulse calculating device 7, are displayed on the display device 12 to thereby indicate the current machining conditions (machining state) .

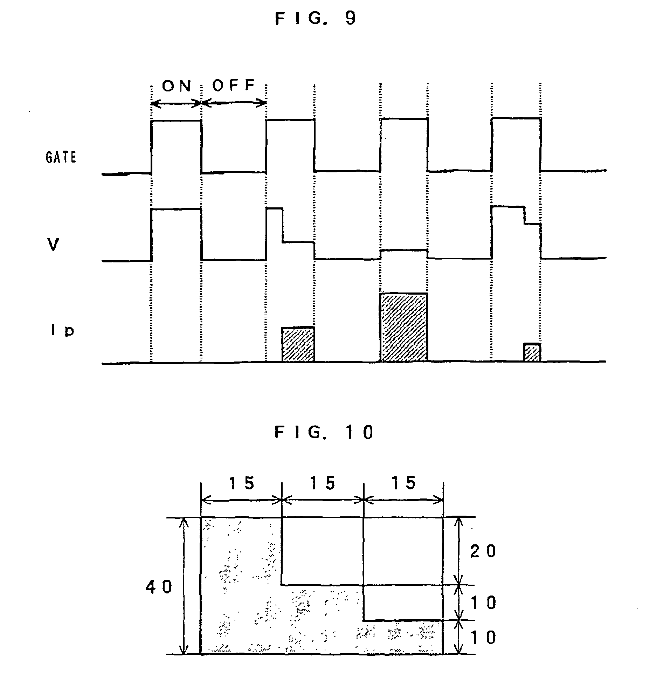

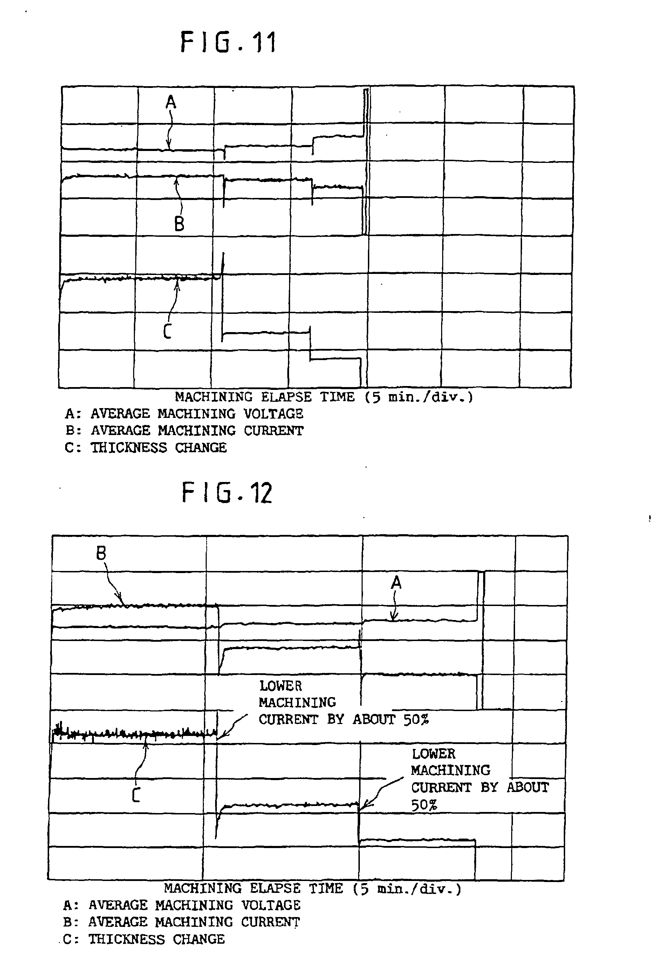

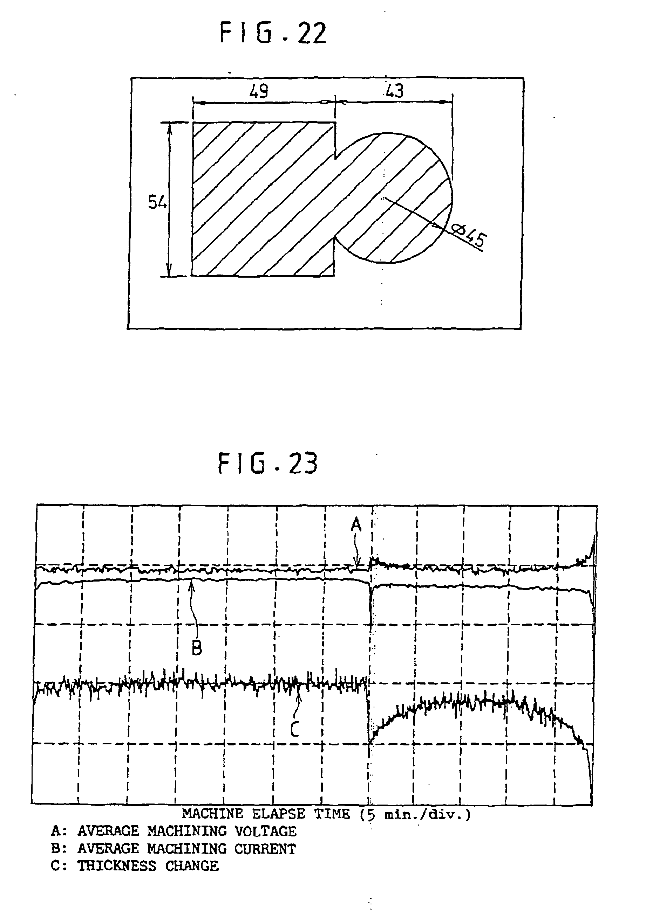

Fig. 11 shows monitor waveforms of the average machining voltage and the average machining current when a workpiece 5 having a sectional shape shown in Fig. 10 is sliced by a conventionally-controlled wire electric discharge machine as mentioned above. Likewise, FIG. 23 shows monitor waveforms of the average machining voltage and the average machining current when a workpiece 5 having a sectional shape shown in FIG. 22 is sliced by the conventional wire electric discharge machine.

Although the plate thickness of the workpiece 5 (the shape being machined) varies, as shown by Fig. 11 and FIG. 23, even when a change in the plate thickness occurs, the average machining voltage remains substantially constant overall. Similarly, the average machining current also remains substantially constant.

Normally, when the part of the workpiece 5 being machined changes from a thick portion to a thin portion, disconnection of the wire electrode 4 is frequently caused. The reason for this seems to be that pulse current is liable to concentrate in a small area at a thin portion of the workpiece. Therefore, conventionally, in order to avoid pulse current from being concentrated in this way, machining is carried out by modifying a machining condition to one suitable for the thin portion right from the start of machining such that a proper average machining current is produced. However, such a modification gives rise to a considerable drop in the machining speed.

When a change in the plate thickness can be predicted and when, for example, an operation can be performed of reducing machining current in a region of a thin plate thickness and increasing the current again in a thicker region, the machining time period can be shortened. Conventionally, as a method of adjusting machining current by finding a change in a plate thickness, there has been devised a method in which thickness information is read from drawings, a machining program is fabricated by including information of increasing or decreasing machining current and the information is instructed or displayed during machining. However, the thickness information is not necessarily derivable directly from dimensions of the drawings. Therefore, in constituting a machining program, the thickness information needs to be specially calculated and has to be instructed in advance. Otherwise, in carrying out cutting as in a cut model or wire electric discharge machining after having coarsely machined a workpiece into shape, although the thickness information may be specially calculated and instructed in advance, such an operation per se is very difficult.

Discharge in electric discharge machining is started by finding a very short conductive path such that a gap formed between an electrode and a workpiece facing the electrode becomes several tens $\mu$m or less by a detection pulse or the like. Then, a main pulse current is caused to flow, vaporizing or melting very small portions of the electrode and the workpiece in contact therewith which are then scattered forcibly by thermal energy produced there. Further, a series of the discharge machining cycles is finished by stopping the current and applying a machining fluid, for cooling.

The degree of vaporization or melting which occurs is determined by the peak magnitude of the main pulse current having a steep rise, thermally related properties of materials of the electrode and the workpiece such as melting temperature or thermal conductivity, and machining environmental properties such as the cooling properties of the machining fluid, e.g. its latent heat of evaporation or viscosity.

When the plate thickness of the workpiece mentioned above is thin, the time period between successive discharges is shorter than that when the plate thickness is thick and accordingly, successive pulses of main pulse current are applied before sufficient cooling can occur. Accordingly, depending on the machining environmental properties mentioned above, heat builds up at the discharge portion which remains uncooled. The discharge portion may even still be molten when the next main pulse is applied. In such a situation, the very small portions of the electrode and the workpiece cannot be scattered, the machining efficiency is extremely deteriorated and a state in which discharge machining is no longer possible is brought about. If main pulses continue to be applied in this situation, the wire constituting the electrode is heated to destruction and/or finally disconnected by having insufficient tensile strength against the forces acting on it.

Meanwhile, when the plate thickness changes, a number of repetitions of discharge needed to progress a certain distance also changes. Therefore, an effect of enlarging the gap between the wire electrode and the workpiece caused by secondary discharge via sludge becomes significant, causing a problem in which an amount of machining shape enlargement (i.e. the width of the machined groove) is enlarged.

Moreover, there is a problem that when the machining speed is intended to increase, there is a limit on the energy capable of being applied to machining imposed by the machining environment such as a material or a plate thickness of the workpiece, and the width of the machined groove at portions of the workpiece having different plate thicknesses is not constant as a result of the difference in a ratio of applied energy to plate thickness.

As mentioned above, it is necessary to avoid the wire electrode from becoming disconnected at the transition between a stage where the plate thickness of the workpiece rapidly changes and a stage where it changes gradually. Further, in respect of an unpredictable change in the plate thickness the machining must be carried out by reducing the machining current and in that case, the machining speed is significantly retarded requiring an extended machining time period. Moreover, the width of the machined groove differs according to the plate thickness as mentioned above, requiring further modification.

US-A-5 362 936 discloses a controller of a wire electric discharge machine according to the preamble of accompanying claim 1. In this controller, the discharge frequency per unit time between a wire electrode and a workpiece is detected, and the thickness of the workpiece is estimated on the basis of the discharge frequency, the relative moving speed between the wire electrode and the workpiece and the information on the shape of the workpiece. Thereafter, the optimum discharge period is calculated on the basis of the estimated thickness of the workpiece and the set processing conditions to perform the processing of the workpiece.

## SUMMARY OF THE INVENTION

An object of the invention is to provide a wire electric discharge machine capable of promoting machining speed by preventing occurrence of disconnection of a wire electrode even with a change in the plate thickness oaf' a workpiece, and improving also a dispersion in the width of the machined groove caused by the change in the plate thickness.

According to the present invention, there is provided a controller of a wire electric discharge machine, comprising: a discharge current generator for supplying a pulsating current to a discharge gap between a wire electrode and a workpiece; thickness detecting means for calculating a measure of thickness of the workpiece based on an energy amount inputted from said discharge current generator; and machining condition adjusting means for adjusting the energy amount inputted from the discharge current generator based on the calculated measure of thickness; characterised in that: machining distance calculating means are provided for calculating a machining distance; said thickness detecting means is arranged to calculate a thickness change rate of the workpiece during machining by a predetermined distance; and said machining condition adjusting means is arranged to adjust said energy amount based on the calculated thickness change rate so that a machining current density is substantially maintained.

According to embodiments of the invention, a controller is installed with a detection voltage generator for applying a detection voltage for detecting a dischargeable state in the discharge gap between a wire electrode and a workpiece, a discharge gap detecting device for detecting the dischargeable state based on a change in the detected voltage, a main pulse generator for supplying main pulses to the discharge gap based on a signal from the discharge gap detecting device, machining distance calculating means for calculating a machining distance and outputting a signal every time the predetermined distance is travelled, and plate thickness change detecting means for calculating an energy amount, based on a main pulse number inputted from the main pulse generator during machining by the predetermined distance, or based on an integrated value of main pulse current, and calculating a plate thickness change rate of the workpiece as a change rate of the inputted energy amount with a reference value, or a change rate of the inputted energy amount every time the predetermined distance is travelled.

In addition, machining condition adjusting means are provided for adjusting the energy amount inputted from the main pulse generator by a pause time period or a peak value or a pulse width of the main pulse current such that a machining current density is substantially maintained by using the calculated plate thickness change rate and the adjustment is carried out such that the machining current density remains unchanged even with the change in the plate thickness. In this way, dispersion in the width of the machined groove is minimised, and the machining speed is enhanced.

## BRIEF DESCRIPTION OF THE DRAWINGS

Fig. 1 is a block diagram of functionally essential portions of a wire electric discharge machine and its monitoring apparatus which is not in accordance with the invention but useful for understanding the same;
Fig. 2 is an explanatory view for explaining a method of detecting a plate thickness in an embodiment of the invention;
Fig. 3 is an explanatory view of a table for storing monitor data;
Fig. 4 is a block diagram of essential portions of an apparatus to which the present invention may be applied;
Fig. 5 is a flowchart for obtaining monitor data;
Fig. 6 is a flowchart of a processing of displaying monitor data;
Fig. 7 is a diagram showing a display example of monitor data with the abscissa of time;
Fig. 8 is a diagram showing a display example of monitor data with the abscissa of distance;
Fig. 9 is an explanatory view of peak values of discharge current and discharge current in a discharge machining power source in which the width is not constant;
Fig. 10 is an explanatory diagram of a workpiece where plate thickness is varied;
Fig. 11 is a monitor diagram of machining average current, machining average voltage and the like in machining the workpiece shown by Fig. 10 by a conventional method;
Fig. 12 is a monitor diagram of machining average current, machining average voltage and the like when the workpiece shown by Fig. 10 is machined by the apparatus of Fig. 1;
Fig. 13 is a constitution diagram of a first embodiment according to the invention;
Fig. 14 is a constitution diagram of a second embodiment according to the invention;
Fig. 15 is a constitution diagram of a third embodiment according to the invention;
Fig. 16 is a constitution diagram of a fourth embodiment according to the invention;

Fig. 17 is a constitution diagram of a fifth embodiment according to the invention;

Fig. 18 is a constitution diagram of a sixth embodiment according to the invention;

Fig. 19 is a constitution diagram of a seventh embodiment according to the invention;

Fig. 20 is a constitution diagram of an eighth embodiment according to the invention;

FIG. 21 is an explanatory diagram of machining voltage and machining current;

FIG. 22 is a sectional view of a workpiece for machining to compare the invention and a conventional example;

FIG. 23 is a monitor diagram when the workpiece having a sectional view shown by FIG. 22 is machined by a conventional electric discharge machining controller;

FIG. 24 is a monitor diagram when the workpiece having the sectional view shown by FIG. 22 is machined by the first embodiment of the invention;

FIG. 25 is a sectional view of a workpiece for machining to observe an effect of the invention;

FIG. 26 is a monitor diagram when the workpiece shown by FIG. 25 is machined by the first embodiment of the invention;

FIG. 27 is a diagram showing a result of measuring a groove width when the workpiece shown by FIG. 25 is machined by a conventional electric discharge machining controller and machined by the first embodiment of the invention;

FIG. 28 is an explanatory diagram showing the constitution of a conventional electric discharge machining controller; and

FIG. 29 is an explanatory diagram showing another constitution of a conventional electric discharge machining controller.

## DETAILED DESCRIPTION OF THE PREFERRED EMBODIMENTS

Before describing the preferred embodiments of the invention, an apparatus useful for understanding the invention, but not in accordance therewith will be explained.

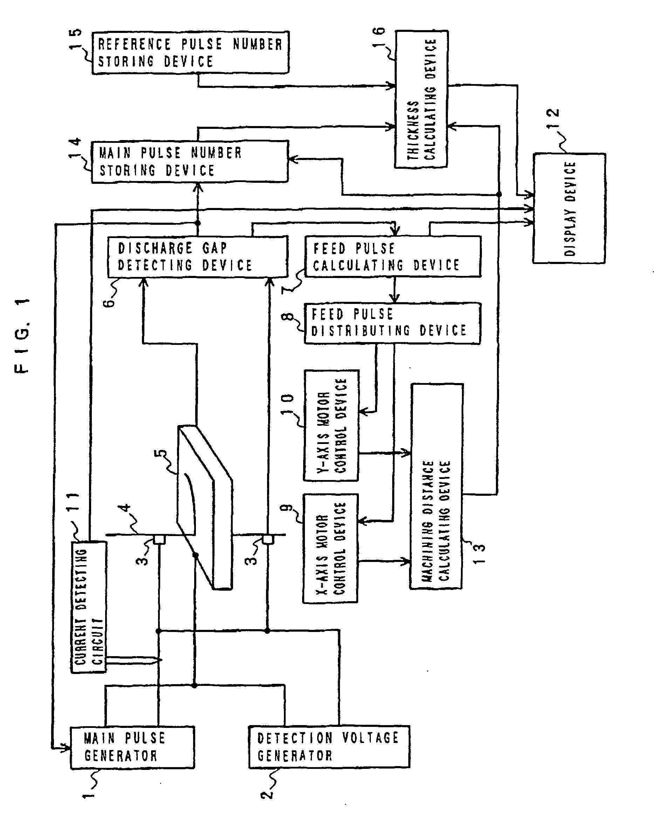

Fig. 1 is a block diagram of functionally essential portions of a wire electric discharge machine and its monitoring apparatus. Parts the same as those of the conventional wire electric discharge machine shown in FIG. 29 have the same reference numerals. Parts differing from the conventional wire electric discharge machine are a machining distance calculating device 13 connected to the X-axis motor control device 9 and the Y-axis motor control device 10 for calculating a machining distance by inputting feed back signals from position detectors attached to motors of the respective shafts and outputting a signal every time a predetermined machining distance has been travelled, a main pulse number storing device 14 for counting main pulse application instruction signals from the discharge gap detecting device 6, a reference main pulse number storing device 15 for storing a reference main pulse number, a plate thickness calculating device 16 for calculating a rate of change of the plate thickness of the workpiece based on an output from the main pulse number storing device 14 and an output from the reference main pulse number storing device 15, as mentioned later, and calculating the plate thickness, and the display device 12 for inputting and displaying the calculated plate thickness, the average machining current outputted from the current detecting circuit 11 and the average machining feed speed outputted from the feed pulse calculating device 7.

A detection pulse voltage is generated from the detection voltage generator 2 and is applied to the gap between the workpiece 5 and the wire electrode 4. When electrical conduction takes place between the workpiece 5 and the wire electrode 4, causing a voltage drop, the discharge gap detecting device 6 detects the voltage drop, determines that electric discharge is possible, and transmits the main pulse application instruction signal to the main pulse generator 1. This causes the main pulse generator 1 to generate a main pulse, so that main pulse current (discharge machining current) flows for a pulse duration of predetermined width to the gap between the workpiece 5 and the wire electrode 4. Further, the main pulse application instruction signal is inputted to the main pulse number storing device 14 to increment a count thereof.

Thereafter, after elapse of a suitable pause time for cooling the gap, the operational cycle of applying the detection pulse to the gap from the detection voltage generator 2 is repeated. Further, the discharge gap detecting device 6 outputs a signal for servo feed to the feed pulse calculating device 7 and the feed pulse calculating device 7 forms a series of pulses controlling the feed pulse interval such that repetition of discharges at the gap is optimised. According to the embodiment, the machining average voltage is controlled to coincide with set voltage (servo voltage) and the calculating device 7 outputs the series of pulses to the feed pulse distributing device 8. The feed pulse distributing device 8 distributes (allocates) the series of pulses between the X-axis and Y-axis based on the machining program, outputs them respectively to the X-axis motor control device 9 and the Y-axis motor control device 10, and drives a table upon which the workpiece 5 is mounted. In this way, machining instructed by the machining program is carried out on the workpiece 5.

The machining distance calculating device 13 calculates a distance moved by the wire electrode 4 relative to the workpiece 5 based on position signals fed back from position detectors attached to the X-axis and Y-axis motors, and outputs signals to the main pulse number storing device 14 and the plate thickness calculating device 16 every time a predetermined machining distance has been travelled. The main pulse number storing device 14 resets its stored value upon receiving this signal and starts counting again the main pulse application signals. Further, the plate thickness calculating device 16 receives the above described signal and calculates the plate thickness based on the main pulse number stored in the main pulse number storing device 14 before it was reset and the reference main pulse number stored in the reference main pulse number storing device 15. The calculated plate thickness is outputted to the display device 12 and the display device 12 displays the plate thickness in a graph form as a function of machining time period or machining distance. Further, the display device 12 receives the average machining current from the current detecting circuit 11 and the average machining speed from the feed pulse calculating device, and these data are also displayed in graphs as functions of the machining time period or the machining distance.

An explanation will now be given of a method of calculating the plate thickness performed in the plate thickness calculating device 16, and which is also performed in embodiments of the present invention as described later.

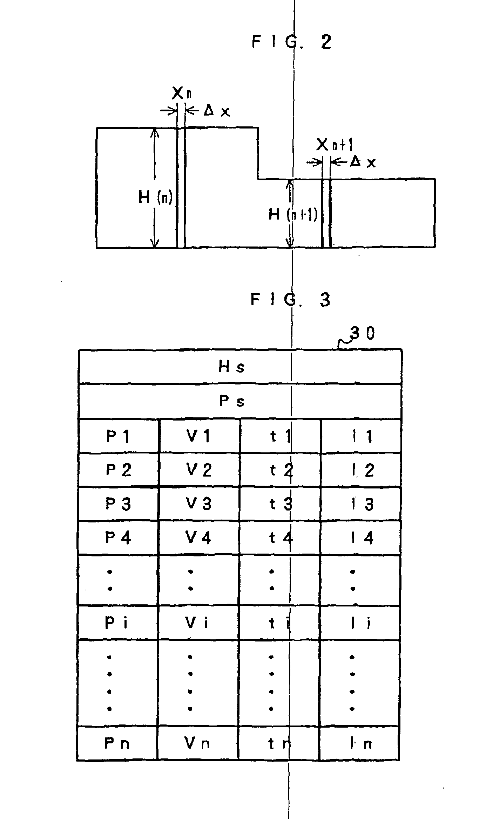

Fig. 2 is an explanatory view of a method of calculating plate thickness in wire electric discharge machining in respect of a workpiece in which the plate thickness changes from H(n) to H(n+1).

With the following notation:-

$\Delta$x: set predetermined machining distance
g: machining enlargement amount (width of machined groove)
A: diameter of wire
P: effective discharge pulse number generated in machining an amount of $\triangle$x
$\Delta$x Q: shortcircuit discharge pulse number generated in machining an amount of $\Delta$x
w1: machining amount per shot of effective discharge pulse
w0: machining amount per shot of shortcircuit discharge pulse, when the wire electrode 4 is moved relative to the workpiece 5 by the set predetermined machining distance $\Delta$x, a machined amount (actual) and a machining amount (intended) are equal to each other and accordingly, a relationship of the following Equation (1) is established.

$$(2g+A) \ x \ H \ x \ \Delta x \ = \ P \ x \ w1 \ + \ Q \ x \ w2 \ \ldots\ldots(1)$$

Incidentally, H signifies the plate thickness H(n) or H(n+1) in Fig. 2.

Further, when machining progresses with a high machining efficiency, the shortcircuit discharge pulse number is small and P>>Q and, the machining amount w0 per shot of the shortcircuit discharge pulse is very small compared with the machining amount w1 per shot of the effective discharge pulse so that w1»w0. Accordingly, by rearranging the above-described Equation (1), the plate thickness H can be approximated by the following Equation (2).

$$H \ = \ \{w1/(2g+A)\} \ x \ (P/\Delta x) \ \ldots \ (2)$$

In Equation (2), w1 and g are values substantially determined by materials of the workpiece and the wire electrode, a peak value of the pulse current and the width of the current pulse, and can be regarded constant so long as machining continues under the same conditions. Further, the wire diameter A is determined by the wire electrode used and accordingly, when these values are taken as constant, by measuring (P/$\Delta$x), the plate thickness H can be calculated from Equation (2).

In Fig. 2, when the plate thickness at position Xn is designated by H(n), the effective discharge pulse number counted when the machining is carried out by the predetermined machining distance $\Delta$x is designated by P(n), the plate thickness at a portion of position Xn+1 is designated by H(n+1) and the effective discharge pulse number is designated by P(n+1), the following equations are established from the above described two equations.

$$H(n) \ = \ \{w1/(2g+A)\} \ X \ (P(n)/\Delta x)$$

$$H(n+1) \ = \ \{w1/(2g+A)\} \ X \ \{P(n+1)/\Delta x)\}$$

Accordingly, when the rate of change of plate thickness is designated by β, the following equation is established.

EP 0 934 791 B1

$$\beta = H(n+1)/H(n) = P(n+1)/P(n)$$

Here, P(n+1) and P(n) each signify an amount of applied energy when machining is carried out by the prede-termined machining distance $\Delta x$ when the peak value of the pulse current and the current pulse width are constant. Hence, the main pulse number (effective discharge pulse number) which is generated in machining a reference plate thickness Hs over the set predetermined machining distance $\Delta x$, is defined as a reference pulse number Ps and is stored in the reference main pulse number storing device 15. Every time movement by the set predetermined machining distance Wax is detected by the machining distance calculating device 13, the main pulse number P counted and stored by the main pulse number storing device 14 up to that point is calculated and the plate thickness change rate can be calculated as $\beta=P/Ps$ from the main pulse number P and the reference pulse number Ps, that is, the applied energy amount (P) and the reference energy application amount (Ps).

Further, the plate thickness change rate in respect of the reference plate thickness is $\beta=H/H(s)$ and accordingly, by multiplying the reference plate thickness Hs by the calculated plate thickness change rate $\beta(=P/Ps)$, the plate thickness H of the workpiece 5 during the machining operation is known. H is calculated as Hs x (P/Ps).

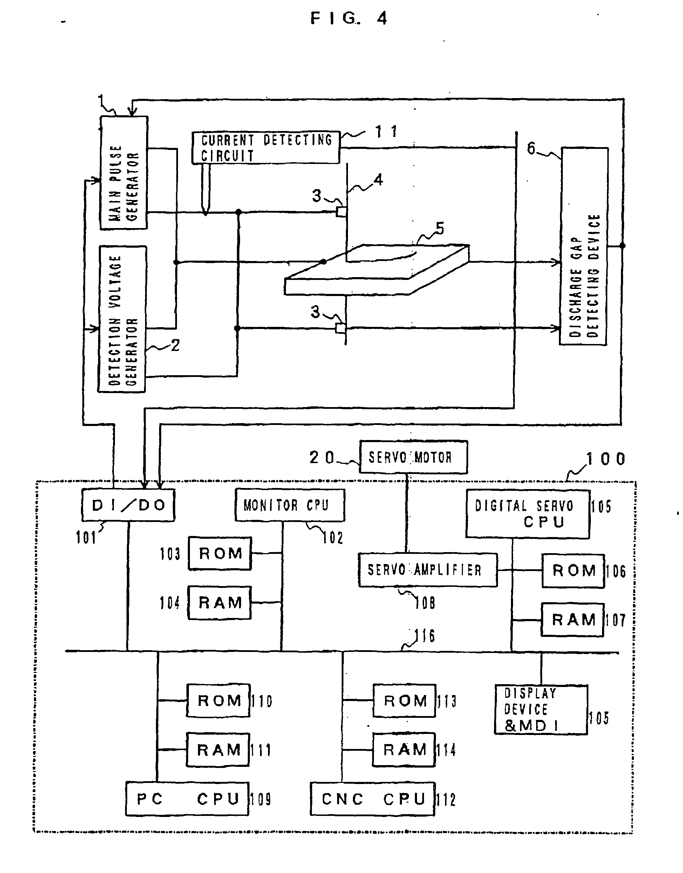

Fig. 4 is block diagram of essential portions of an apparatus for implementing the functional portions of Fig. 1, and to which the present invention may be applied.

A CNC (Computer Numeral Control) apparatus is used as a controller 100 and function and operation of elements 7 through 15 in Fig. 1 are carried out by the controller 100. Further, elements the same as those of Fig. 1 have the same reference numerals.

The controller 100 is provided with a monitor CPU (processor for monitoring) 102 for monitoring discharge, calculating the servo feed amount and monitoring the main pulse number during discharge, a digital servo CPU (processor for servo control) 105 for controlling the driving of X- and Y-axis servo motors for moving the workpiece 5 relative to the wire electrode 4, PCCPU (processor for programmable controller) 109 for forming display data, controlling graphic display and sequentially controlling the wire electric discharge machine and CNCCPU (processor for numerical control) 112 for controlling machining position based on the machining program. Each of these CPU's is connected to a bus 116. Further, the bus 116 has connected to it an input/output circuit 101 and a display device & MDI (manual input device with display device) 105.

ROM 103 storing a system program for the monitor CPU, and RAM 104 holding a table for storing detected monitor data, mentioned later, are also connected to the bus 116. Further, ROM 106 for storing a system program for the digital servo CPU 105 to carry out servo control, RAM 107 utilized for temporarily storing various data and a servo amplifier 108 for driving the X- and Y-axis servo motors, are connected to the bus. Although servo motors of respective shafts are connected to the servo amplifier 108, in Fig. 4, only one servo motor 20 is shown. Further, although not illustrated, each of the servo motors is provided with a position and speed detector for detecting position and speed of the workpiece 5 relative to the wire electrode 4.

The PCCPU 109 is connected to a further ROM 110 storing a system program for the CPU 109, and to a further RAM 111 used for temporarily storing data, by the bus 116. The CNCCPU 112 is connected to a further ROM 113 for storing a system program for the CPU 112, and to a RAM 114 used for temporarily storing data, by the bus 116. The controller 100 constituted by the above-described CNC device is the same as a conventional controller.

Similar to the conventional controller, CNCCPU 112 controls an interval of feed pulses (controls the feed speed) such that the average machining voltage of the gap between the workpiece 5 and the wire electrode 4 stays constant based on the machining program stored in RAM 114 The CNCCPU 112 distributes movement instructions to respective shafts, the digital servo CPU 105 carries out feedback control of position and speed based on the distributed movement instructions and feedback signals of position and speed from position and speed detectors attached to the respective servo motors, and controls the driving of the servo motors 20 of the respective shafts via the servo amplifiers 108. Further, similar to the conventional device, the discharge gap detecting device 6 detects that the discharge gap is brought into a dischargeable state by lowering the detection pulse voltage, and outputs the main pulse application instruction signal to the main pulse generator 1 and to the input/output circuit 101. The main pulse generator 1 generates the main pulse and causes the main pulse current (discharge machining current) to flow in the gap between the workpiece 5 and the wire electrode 4. Further, the current detecting circuit 11 detects the machining current and outputs an average machining current I during a predetermined time period, which is output at every predetermined time period to the input/output circuit 101. The above-described operation is the same as that of the conventional controller.

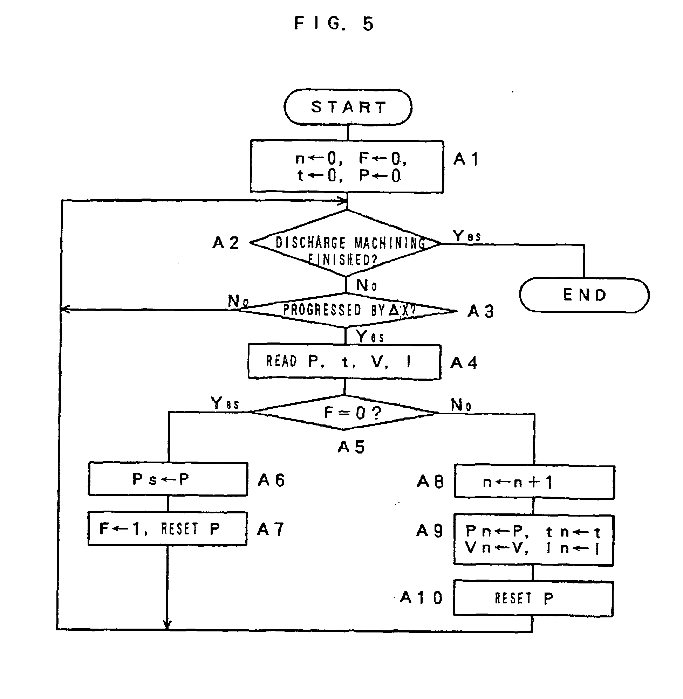

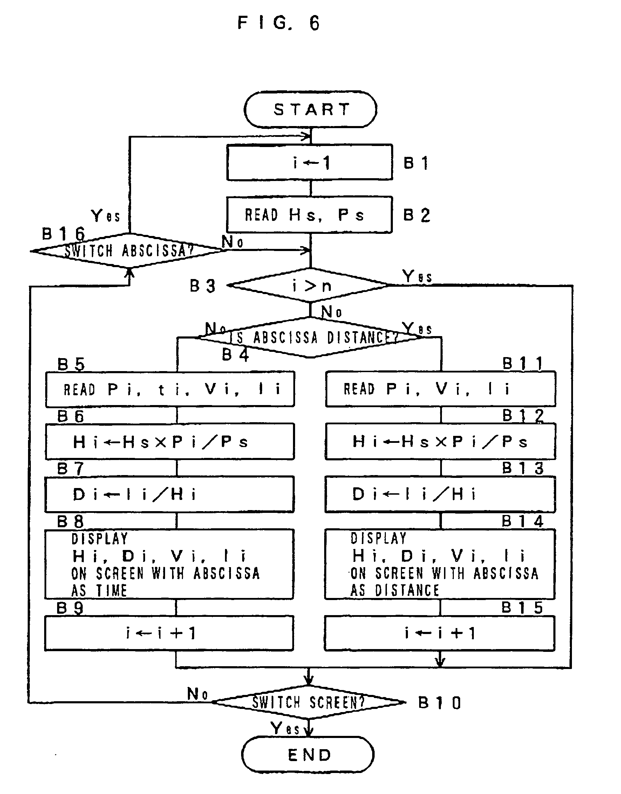

The above apparatus has the feature that plate thickness of the workpiece 5 can be displayed and monitored in real time in the controller 100 and an explanation will be given of operation and action of this feature with reference to flowcharts shown in Fig. 5 and Fig. 6.

Fig. 5 is a flowchart of the processing for inputting monitor data which the monitor CPU 102 executes during each predetermined period of time by multiple task processing. First, an operator inputs the plate thickness at the start of machining the workpiece 5 to provide a reference plate thickness Hs which is stored in a table 30 as shown in Fig. 3 installed in RAM 104. Further, when the machining instruction is inputted, CNCCPU 112 starts machining by distributing movement instructions to the respective shafts based on the machining program. The monitor CPU 102 resets registers for storing writing index n designating address of the table 30 for storing monitor data, flag F, timer t and the main pulse number P to "zero", and starts the timer (Step A1). The monitor CPU 102 then determines whether the discharge machining has finished or not (Step A2). and if not, determines whether the machining distance has progressed by the set distance $\triangle x$ or not (Step A3). Steps A2 and A3 are repeated until progress by the set distance $\triangle x$ is detected.

Further, although calculation of the distance $\triangle x$ is not shown in the flowchart, RAM 107 is used to register the current values of the respective shafts for summing up positional feedback signals which are fed back from the position and the speed detectors of the X-axis and Y-axis and to provide the current position for processing by the digital servo CPU 105. Values of the respective shaft current value of registers are stored at the start of machining and upon every detection of movement by the predetermined distance $\triangle x$ and a movement amount is calculated by a difference between the values of registers of the respective shaft current value detected at every processing time period and the stored values. In this way, it is determined whether the movement amount is equal to or larger than the set distance $\triangle x$.

Further, the monitor CPU 102 simultaneously monitors the main pulse application instruction signals outputted from the discharge gap detecting device 6 in parallel with the processing shown in Fig. 5, counts the number thereof, that is, the main pulse number P, and stores it in a register in RAM 104.

Then, when the movement amount is detected to be equal to or more than the set $\triangle x$ at Step A3, the monitor CPU 102 reads values of the main pulse number P and timer t accumulated up to that time, and reads the machining speed (feed speed) V at that time point, which is calculated by CNCCPU 112 and the average machining current I outputted from the current detecting circuit 11 (Step A4). Next, whether flag F is "null" is determined. When the flag F is "null" and it is detected that machining by the first set distance $\triangle x$ from start of machining has been finished, the main pulse number P read at Step A4 is stored in the table 30 as the reference main pulse number Ps (Step A6), the flag F is set to "1", a register storing the main pulse number P is reset (Step A7) and the operation proceeds to Step A2.

When movement of the set distance $\triangle x$ is detected by repeatedly executing processings of Steps A2 and A3, the operation proceeds to Step A4. That is, the main pulse number P, the value of the timer t, the machining speed V and the average machining current I are read, and operation proceeds from Step A5 to A8 since the flag F is set to "1". Further, the index n is incremented by "1" and the main pulse number P, the value of the timer t, the machining speed V and the machining current I read at Step A4 are stored to addresses of the table 30 respectively indicated by the index n as Pn, tn, Vn and In (Step A9). Next, a register storing the main pulse number P is reset (Step A10) and the operation returns to Step A2. Thereafter, processings of Steps A2 through A5 and A8 through A10 are repeatedly executed and the main pulse number P, the value of the timer t, the machining speed V and the machining current I are stored in the table 30 as shown by Fig. 3 every time machining progresses by the set distance $\triangle x$ until the electric discharge machining is finished.

Fig. 6 is a flowchart of processing for displaying monitor data executed by PCCPU 109.

When a display screen of monitor data is selected, PCCPU 109 starts the processing of Fig. 6. Firstly, it sets the reading index i designating the address for reading data from the table 30 to "1" (Step B1) and reads the reference plate thickness Hs and the reference main pulse number Ps stored in the table 30 (Step B2). Next, the operation determines whether the reading index i of data is larger than the index n for designating the address for writing data (Step B3). When the index i is smaller than the index n, the operation determines whether the abscissa of the display screen is set to time or distance (Step B4).

When the abscissa is set to time, the operation proceeds to Step B5 and reads data Pi, ti, Vi and Ii stored at the addresses indicated by the index i from the table 30. Further, as mentioned above, the plate thickness Hi is calculated by multiplying a value produced by dividing the read main pulse number Pi by the reference main pulse number Ps (as described above, the value signifies the plate thickness change rate $\beta$) by the reference plate thickness Hs (Step B6), Further, the current density Di is calculated by dividing the read average machining current Ii by the plate thickness Hi calculated at Step B6 (Step B7).

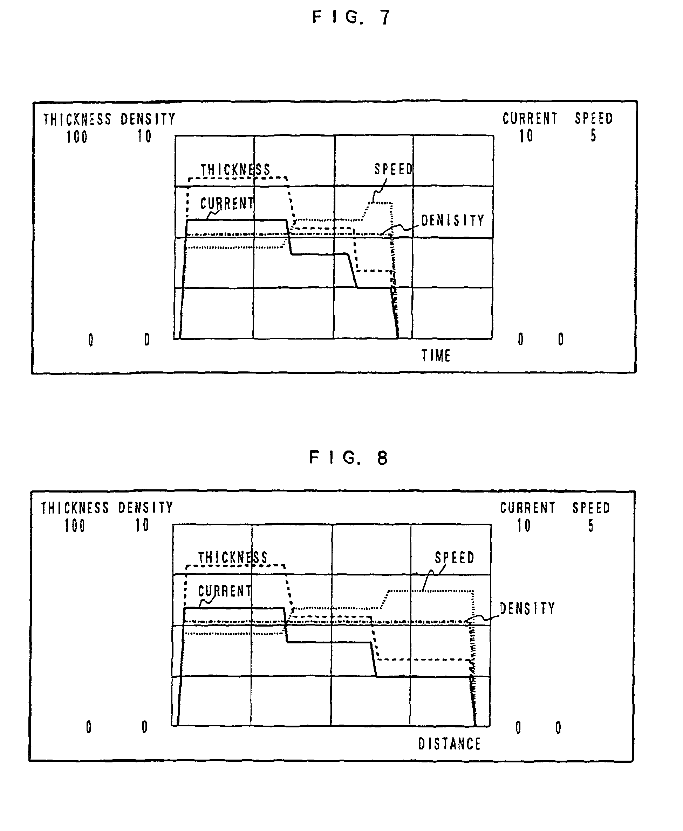

Next, time is set to the abscissa and the plate thickness, the current density, the machining speed and the machining current are set to the ordinate (refer to Fig. 7), a position in correspondence with the read timer value Hi is found on the abscissa, positions respectively in correspondence with the calculated plate thickness Hi, the current density Di, the machining speed Vi and the machining current Ii are found on the ordinate and the plate thickness Hi, the current density Di, the machining speed Vi and the machining current Ii are displayed on a display screen of the display device and MDI 105 at positions where the found positions of the abscissa and the ordinate intersect (Step B8). Thereafter, the index i is incremented by "1" (Step B9), and the operation determines whether the screen is switched (Step B10)

When the monitor screen is not switched, the operation determines whether the abscissa is switched and set to distance (Step B16) and when it is not switched and the abscissa designates time, the operation proceeds to Step B3. Thereafter, when there is no switching of the screen and switching of the abscissa, Steps B3 through B10 and B16 are repeatedly executed until the reading index i exceeds the writing index n and the plate thickness, the current density, the machining speed and the machining current are displayed in the display screen of the display device and MDI105 with the abscissa as time axis as shown by Fig. 7.

Further, when the index i exceeds the index n, the operation proceeds from Step B3 to Step B10 and further graphical display is stopped. Meanwhile, when the index n is incremented by "1" by the processing at the Step A8 shown by Fig. 5 and new monitor data is added to write to the table 30, values of the index i and the index n coincide with each other at Step B3 and accordingly, the operation proceeds to Step B4 and Step B5. Thereafter, it carries out the above-described display processing and the plate thickness, the current density, the machining speed and the machining current are additionally displayed on the display screen (Steps B6 through B8). That is, every time machining progresses by $\Delta x$, the monitor data Pi, ti, Vi and Ii are increased or updated, so that the plate thickness Hi, the current density Di, the machining speed Vi and the machining current Ii are calculated and additionally displayed on the display screen and these data are displayed in real time.

When the abscissa is set to distance, the operation proceeds from Step B4 to Step B11, carries out Steps B11 through B13 which are the same as Steps B5 through B7 mentioned above, calculates the plate thickness Hi and the current density Di, sets distance to the abscissa and displays these data graphically at ordinate positions corresponding to the plate thickness Hi, the current density Di, the machining speed Vi and the machining current Ii and positions on the abscissa corresponding to the index i multiplied by $\Delta x$ (Step B14). Then, the index i is incremented by "1", the operation proceeds to Step R10, and Steps B3, B4, B11 through B15, B10 and B16 are repeated until the index i exceeds the value of the index n when there is no switching of screen and switching of the abscissa, and the plate thickness Hi, the current density Di, the machining speed Vi and the machining current Ii are displayed with the abscissa as distance as shown by Fig. 8.

In this case, although the display is stopped at a time point at which the reading index i exceeds the value of the writing index n, when the writing index n is incremented and new monitor data is written to the table 30, Steps B3, B4 and B11 through B15 are immediately executed and new values of the plate thickness Hi, the current density Di, the machining speed Vi and the machining current Ii are displayed in real time.

Further, when the operator changes the abscissa from time to distance or from distance to time, PCCPU 109 detects the change at Step B16, the processing returns to Step B1, executes display processing from the start and reexecutes drawing in conformity with the new abscissa.

As described above, the plate thickness Hi, the current density Di, the machining speed Vi and the machining current Ii are displayed on the display screen in real time and when the plate thickness of the workpiece 5 is changed in the midst of machining, the plate thickness on the display screen is also changed. Fig. 7 and Fig. 8 show monitor display screens provided in machining a workpiece 5 having the shape shown in Fig. 10. When machining reaches a point where the plate thickness is reduced, as shown by Fig. 7 and Fig. 8, the displayed plate thickness is also reduced.

As shown in Fig. 11, the average machining current stays substantially constant in the absence of further action. Accordingly, the current density Di produced by dividing the average machining current Ii by the calculated plate thickness Hi will increase (in Fig. 7 and Fig. 8, the increased current density Di is not displayed). Hence, the operator confirms that the plate thickness has been changed on the display screen, adjusts one of (i) the pause time period of pulses applied to the gap between the workpiece 5 and the wire electrode 4, or (ii) the feed speed (servo voltage in servo feed control for controlling feed speed such that the average machining voltage at the gap between the workpiece 5 and the wire electrode 4 becomes a set servo voltage), or (iii) applied voltage of the pulses, and thereby adjusts the machining current such that the displayed current density Di stays constant and remains unchanged before and after change of the plate thickness. Fig. 7 and Fig. 8 display the current density Di after adjustment.

As shown by Fig: 7 and Fig. 8, adjustment is carried out such that the current density Di remains unchanged even when the plate thickness is changed. This means that when the plate thickness is reduced, the value of the average machining current is also reduced and the machining speed is conversely increased. Further, Fig. 12 shows graphs of the machining average voltage and the machining average current when the workpiece 5 of Fig. 10 is machined, and the above adjustment of the machining current is carried out. As shown, in conformity with the change of plate thickness, the machining current is reduced by 50 % at the point at which the plate thickness is reduced by 50 %. By comparing Fig. 12 with Fig. 11 showing machining by the conventional method, a machining condition (machining current) suitable for the plate thickness can be used and therefore, the machining time period is relatively short, being finished in about 14 minutes. However, in the case of the conventional method, the machining condition (machining current) is determined in to suit the portion of machining during which the plate thickness is small; accordingly, the machining period is prolonged unnecessarily during that portion of machining where the plate thickness is large, and a machining time period of about 20 minutes is required.

In machining the workpiece of Fig. 10 having three steps, the initially machined plate thickness is set to Hs as a reference plate thickness, and the reference main pulse number at the occasion is set to Ps. Labelling the plate thickness at the second step as H1, the plate thickness at the third step as H2 and the main pulse number when the plate thickness changes from Hs to H1 is as P1, then the following relationship holds.

$$H1 = Hs(Pl/Ps) \ldots (3)$$

Assume that the machining current is adjusted and the main pulse number in machining the plate thickness at the second step is P2. Although the machining speed is changed before and after adjusting the machining current, an amount of machining stays constant since the plate thickness stays constant and the machining is carried out by the movement distance $\Delta x$, the inputted energy stays constant and accordingly, a relationship of P1=P2 is established Further, assume that the main pulse number is P3 at the point of transition from the second step (H1) to the third step (H2), then, the following relationship applies from equation (3):

$$H2 = H1(P3/P2) = Hs(Pl/Ps)(P3/P2)$$

As mentioned above, P2=P1, as a result, the following equation is established.

$$H2 = Hs(P3/Ps) \ldots (4)$$

Thus, when the plate thickness changes a number of times and the machining current is adjusted each time, the plate thickness Hi can be calculated using the reference plate thickness Hs and the reference main pulse number Ps which are initially set and calculated and the main pulse number Pi at each stage of progress of machining by $\Delta x$.

In the above-described operation, a voltage lower than the main pulse voltage is applied from the detection voltage generator 2 to the gap between the workpiece 5 and the wire electrode 4, and the power source for applying the main pulse is used by determining whether electricity can be discharged by lowering of the voltage of the gap. Thereby, the energy of discharge due to a single main pulse stays constant. Therefore, by counting the number of main pulses applied between the workpiece 5 and the wire electrode 4, an amount of energy inputted for discharge machining can be calculated. The inputted energy amount can also be calculated by summing up discharge current instead of counting the main pulses. Further, a summed value of discharge current at each progress of machining by $\Delta x$ may be calculated and used to calculate the plate thickness.

Although the method of detecting the plate thickness on the basis of the inputted energy amount (summed value of discharge current) is applicable to a case in which discharge current and time width of main pulses stay constant as in the above-described operation, the method is more suitable for the case in which values and time widths of respective discharge currents differ. For example, the method is especially suitable for the case of a known discharge machining power source using capacitor discharge, or a discharge machining power source in which direct current voltage is applied between the workpiece 5 and the wire electrode 4 simply by switching elements and to produce a discharge. For example, using such a power source in which charge voltage of a capacitor or direct current power source voltage is applied between the workpiece 5 and the wire electrode 4 using switching elements to open a gate for a set ON time period as shown by Fig. 9, discharge current flows during the ON time period to thereby carry out discharge machining, peaks and time widths of the discharge current depend on the discharge start time, and as shown by Fig. 9, an amount of energy of discharge current in one discharge varies. In such a case, the amount of inputted energy dissipated in the discharge machining is calculated not by counting discharge pulses but by calculating the summed value of the discharge current, which is used in place of the main pulse number P.

That is, in processing executed by the monitor CPU 102 of the controller 100, the number of application instructions of main pulses from the discharge gap detecting device, that is, the main pulse number P, is not counted, but rather the average machining current outputted from the current detecting circuit 11 is read at every predetermined time period and summed (accumulated) in a register and the current summed value is used in place of the main pulse number P.

Likewise, among the monitor data shown in Fig. 5 or 6, P may be replaced by the current summed value.

In the above two methods of operation, as shown by Steps B6 and B12 of Fig. 6, the reference plate thickness Hs and the reference inputted energy amount Ps are used in correspondence with the reference plate thickness (main pulse number or discharge current summed value). However, in place of the reference plate thickness Hs and the reference inputted energy amount Ps, every time machining has progressed by the set distance $\Delta x$, the current plate thickness Hi may be calculated using the plate thickness Hi-1 and inputted energy amount Pi-1 calculated at the preceding time. In this case, according to the processing shown by Fig. 5, the plate thickness which is set before start of machining is used to initialise a register storing the plate thickness at a preceding time and according to Step A6, the inputted energy amount P which has been calculated (main pulse number or discharge current summed value) is stored in a register storing the inputted energy amount at a preceding time. Otherwise, processing similar to that shown in Fig. 5 is carried out and the table 30 as shown in Fig. 3 is formed.

In this case, referring to the flowchart of Fig. 6, the processing at Step B2 is not carried out, the operation proceeds from Step B1 to B3 and according to the processings at Steps B5 and B11, data Pi, ti, Vi and Ii stored in the table 30 are read and the plate thickness and the inputted energy amount are read from registers storing the plate thickness and the inputted energy amount at a preceding time. The read plate thickness and the inputted energy amount at the preceding time are defined as Hi-1 and Pi-1. Further, in the plate thickness calculating processing at Steps B6 and B12, the plate thickness Hi is calculated by carrying out the following calculation.

$$Hi = Hi\text{-}1 \ (Pi/Pi\text{-}1) \ ... \ (5)$$

Thus thus-calculated Hi and Pi are used to update the registers storing the plate thickness and the inputted energy amount at the preceding time and the operation proceeds to Step B7 or B13. The subsequent steps are the same as those in the processing of Fig. 6.

By the above-described processes, while the plate thickness of the workpiece 5 remains unchanged, the machining amount of the machining distance $\Delta x$ remains unchanged, the inputted energy amount remains unchanged and accordingly, the inputted energy amount Pi-1 at the preceding time and the inputted energy amount Pi at the current time are substantially equal to each other and the plate thickness Hi calculated by the above-described equation stays the same as the plate thickness Hi-1 at the preceding time. Meanwhile, when the plate thickness is changed, a difference is caused in the amount of machining when the machining is carried out by the machining distance $\Delta x$ in accordance with the change in the plate thickness. Further, a difference is also caused in the inputted energy amount by the difference in the machining amount and accordingly, a difference is caused between Pi and Pi-1. As a result, the changed plate thickness Hi is calculated by the above-described equation (5) and the plate thickness is stored in the register storing the plate thickness at the preceding time.

In this way, the plate thickness can be successively calculated based on the plate thickness and the inputted energy at the preceding time.

<First Embodiment>

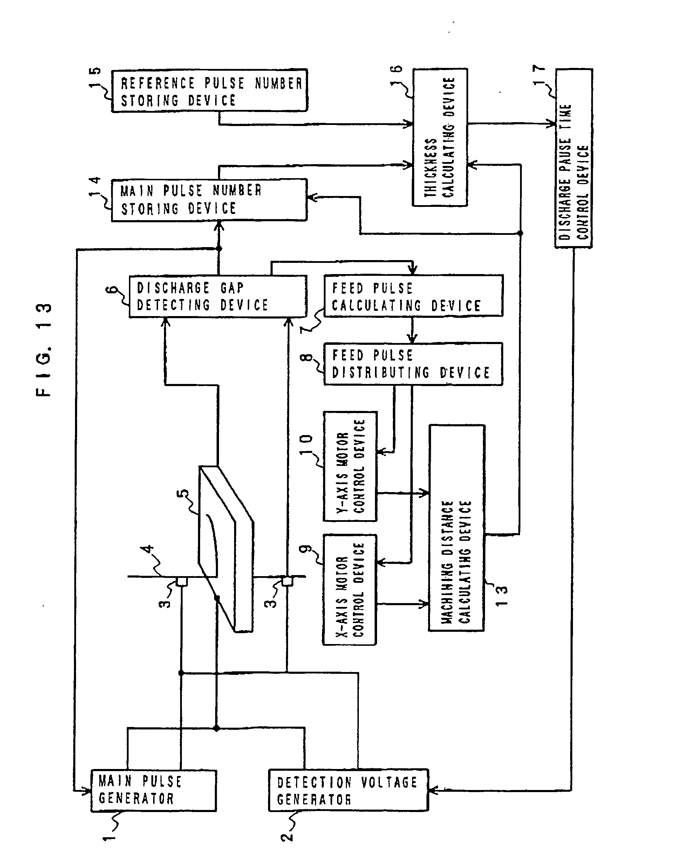

Fig. 13 is a constitution diagram of essential portions of a first embodiment of a wire electric discharge machine according to the invention. It differs from the conventional wire electric discharge machine shown by FIG. 28 in having (a) a machining distance calculating device 13 connected to the X-axis motor control device 9 and the Y-axis motor control device 10 for calculating machining distance by inputting feedback signals from position detectors attached to motors of the respective shafts and outputting a signal every time machining proceeds by a predetermined machining distance; (b) the main pulse number storing device 14 for counting a main pulse input signals from the discharge gap detecting device 6; (c) the reference main pulse number storing device 15 for storing the reference main pulse number; (d) the plate thickness calculating device 16 for calculating the plate thickness change rate of the workpiece based on outputs of the storing devices 14 and 15; and (e) a discharge pause time control device 17 for calculating a pause time period of the detection pulses using the calculated plate thickness.

That is, according to the first embodiment, plate thickness change detecting means is constituted by the main pulse number storing device 14, the reference main pulse number storing device 15 and the plate thickness calculating device 16 and the discharge pause time control device 17 is provided as a machining condition adjusting means. As compared with the controller shown in FIG. 1, the first embodiment differs in that a discharge pause time control device 17 is provided in place of the display device 12 and that the current detecting circuit 11 is not provided.

A detection pulse voltage is applied from the detection voltage generator 2 to the gap between the workpiece 5 and the wire electrode 4. When a voltage drop occurs between the workpiece 5 and the wire electrode 4, the discharge gap detecting device 6 transmits the main pulse input signal to the main pulse generator 1, and causes the main pulse current with a predetermined width (discharge machining current) to flow from the main pulse generator 1 to the gap between the workpiece 5 and the wire electrode 4. Further, the main pulse input signal is inputted to the main pulse number storing device 14 and is counted.

Thereafter, after elapse of a suitable pause time period for cooling the gap, the operational cycle for applying the detection pulse to the gap from the detection voltage generator 2 is repeated. Further, the discharge gap detecting device 6 transmits a signal for servo feed to the feed pulse calculating device 7, and the feed pulse calculating device 7 forms a series of pulses such that repetition of discharges at the gap is optimised, and outputs the series of pulses to the feed pulse distributing device 8. The feed pulse distributing device 8 distributes the series of pulses among the of X-axis and Y-axis based on the machining program, outputs them respectively to the X-axis motor control device 9 and the Y-axis motor control device 10, and drives a table bearing the workpiece. Thus, machining is carried out.

The machine distance calculating device 13 outputs a signal to the main pulse number storing device 14 and the plate thickness calculating device 16 each time the wire electrode 4 moves relative to the workpiece 5 by a predetermined machining distance. The main pulse number storing device 14 counts and stores the main pulse input signals between the above outputted signals. Further, the plate thickness calculating device 16 receives the above outputted signal, and calculates the plate thickness using the numbers stored in storing devices 14 and 15. The above procedure is the same as that in the controller of FIG. 1. In this embodiment, using the calculated plate thickness, the discharge pause time control device 17 calculates a pause time period of the outputted pulse, and outputs it to the detection voltage generator 2 to set the pause time period.

Then, the plate thickness H is obtained by the plate thickness calculating device 16. As already described with reference to Fig. 2, the plate thickness change rate P is obtained as P/Ps (the main pulse number P/ the reference pulse number Ps) when the plate thickness is changed from H(n) to H(n+1). The plate thickness calculating device 16 performs the calculation of "P/Ps" to obtain the plate thickness change rate β based on the values of P and Ps held in storing devices 14 and 15. Wire-disconnection and a change in the width of the machined groove are minimised by optimally controlling the machining current density such that it is not changed by a change in the plate thickness based on the thus-obtained plate thickness change rate β.

Further, according to the first embodiment shown in Fig. 13, the machining current is optimally controlled by controlling the discharge pause time period using the discharge pause time control device 17.

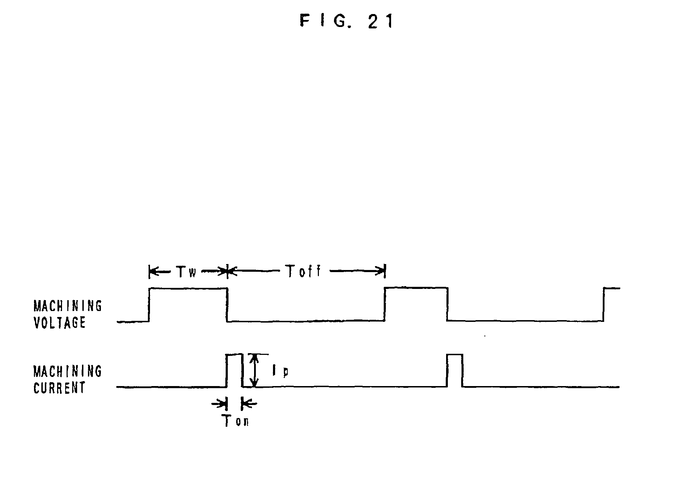

As shown by FIG. 21, a time period from when detection voltage is applied from the detection voltage generator 2 to the gap between the wire electrode 4 and the workpiece 5 to when main pulse current is inputted is defined as a no load machining time period Tw. A current peak value is designated by Ip and a current pulse width thereof is designated by Ton. When electricity conduction is caused between the wire electrode 4 and the workpiece 5 and detected voltage is lowered, the voltage drop is detected by the discharge gap detecting device 6, a main pulse input signal is outputted and main pulse current is inputted from the main pulse generator 1. Further, a time period for stopping to apply the detection voltage to the gap is defined as a pause time period Toff, the average machining current is designated by Im and the machining current density is designated by Id in one discharge cycle. In Fig. 2, respective values at machining portion Xn and Xn+1 are designated as follows.

Current peak value (A) : Ip(n), Ip(n+1)
Current pulse width ($\mu$s) : Ton(n), Ton(n+1)
Pause time period ($\mu$s) : Toff(n), Toff(n+1)
No load machining time period ($\mu$s) : Tw(n), Tw(n+1)
Average machining current (A) : Im(n), Im(n+1)
Machining current density (A/mm$^2$) : Id(n), Id(n+1)
Plate thickness : H(n), H(n+1)

In this case, the average machining currents Im(n) and Im(n+1) and the machining current densities Id(n) and Id(n+1) are calculated by the following relationships.

$$Im(n) = Ip(n) \times Ton(n) / (Tw(n) + Toff(n)) \quad \dots \quad (6)$$

$$Id(n) = Im(n) / (H(n) \times (A+2g)) \quad \dots \quad (7)$$

$$Im(n+1) = Ip(n+1) \times Ton(n+1) / (Tw(n+1) + Toff(n+1)) \quad \dots \quad (8)$$

$$Id(n+1) = Im(n+1) / (H(n+1) \times (A+2g)) \quad \dots \quad (9)$$

When the current densities at portions of positions Xn and Xn+1 are made constant (Id(n)=Id(n+1)), the following equation (10) is obtained from Equation (7) and Equation (9).

$$Im(n) / (H(n) \times (A+2g)) = Im(n+1) / (H(n+1) \times (A+2g) \quad \dots \quad (10)$$

From Equation (10), H(n+1)/H(n)=Im(n+1)/Im(n) is established, which signifies the plate thickness change rate

β as follows:

$$\beta = H(n+1)/H(n) = Im(n+1)/Im(n) \quad \dots \quad (11)$$

That is, when the current density is made constant, a change rate of the machining average current Im coincides with the plate thickness change rate and the machining average current Im is proportional to the plate thickness t.

Meanwhile, machining conditions in wire electric discharge machining may normally be approximated as follows.

$$Ton(n) \ll Tw(n)+Toff(n)$$

$$Ton(n+1) \ll Tw(n+1)+Toff(n+1)$$

$$Ip(n) = Ip(n+1)$$

Further, following approximation can be carried out.

Ton(n) = Ton (n+1)

Hence, by rearranging Equations (6), (7) and (10) from the above-described conditions, the following equation is established.

$$\beta = Im(n+1)/Im(n) = \{Tw(n)+Toff(n)\}/\{Tw(n+1)+Toff(n+1)\} \quad \dots \quad (12)$$

Equation (12) signifies that in order to make constant the current densities at portions of positions Xn and Xn+1, the pause time of machining (Tw(n)+Toff(n)), which is produced by adding the pause time period Toff(n) to the no load machining time period Tw(n) at the portion of position X(n) multiplied by a reciprocal number of the plate thickness change rate β, determines a new time period (Tw(n+1)+Toff(n+1)) for which machining is to be paused at position X(n+1).

Meanwhile, when servo feed control is carried out such that the machining average voltage becomes constant, machining voltages at portions of positions Xn and Xn+1 of Fig. 2 are substantially equal, so that:

$$Tw(n)/\{Tw(n)+Toff(n)\}=Tw(n+1)/\{Tw(n+1)+Toff(n+1)\}$$

From the above equation, the following equation is established.

$$Tw(n+1)/Tw(n)=\{Tw(n+1)+Toff(n+1)\}/\{Tw(n)+Toff(n)\} \quad \dots \quad (13)$$

From Equation (7) and Equation (8), the following equations are established.

$$Tw(n+1) = Tw(n)/\beta \quad \dots \quad (14)$$

$$Toff(n+1) = Toff(n)/\beta \quad \dots \quad (15)$$

This means that, in order to keep the machining current density constant when the plate thickness is changed, the pause time period Toff(n+1) after a change of the plate thickness needs to be changed to a value of the pause time period Toff(n) before the change of the plate thickness multiplied by the reciprocal number of the plate thickness change rate β (1/β).

Hence, returning to the first embodiment, shown by Fig. 13, the plate thickness calculating device 16, calculates the plate thickness change rate β in respect of the reference plate thickness Hs using the values of P and Ps and then, in the discharge pause time control device 17, the pause time period Toff(s) machining the reference plate thickness Hs set by Equation (15) is multiplied by the reciprocal number of the plate thickness change rate β to derive the pause time period Toff optimum to the plate thickness of the workpiece 5. The detection voltage generator 2 receives the calculated value of Toff and sets it in a cycle of applying detection voltage to the gap between the workpiece 5 and the wire electrode 4. Thereby, machining is carried out using a machining current density the same as that for machining the reference plate thickness Hs and even when the plate thickness is changed, there is no occurrence of disconnection of the wire electrode and the width of the machined groove does not change.

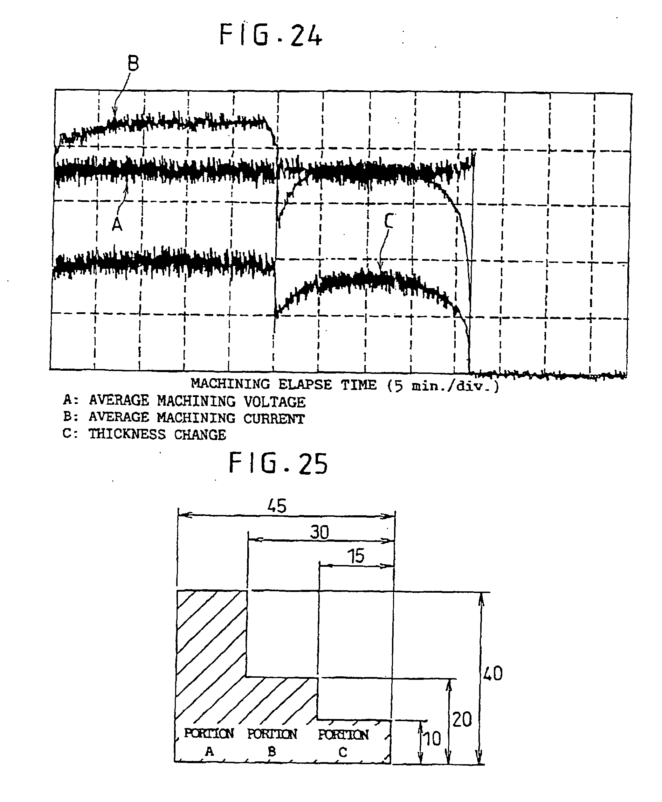

FIG. 24 shows monitor waveforms when the above-described control is executed by the controller of the wire electric discharge machine according to the first embodiment in slicing the workpiece shown by FIG. 22. FIG. 24 shows that current is property controlled in accordance with a change in the plate thickness. Therefore, the machining average current can be increased more than in the conventional control shown by FIG. 23 and the machining time period is shown to be shortened significantly.

<Second Embodiment>

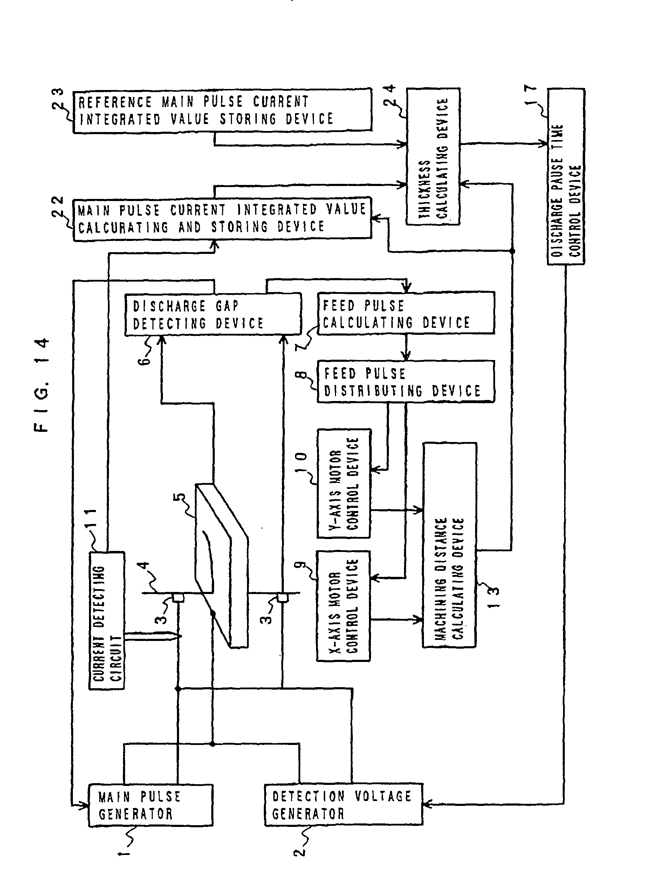

Fig. 14 shows a second embodiment of the invention. Portions the same as those of the first embodiment have the same reference signs. The differences are that (i) a current detecting circuit 11 for detecting discharge current is installed, in place of the main pulse number storing device 14, the reference main pulse number storing device 15 and the plate thickness calculating device 16 of the first embodiment; and (ii) a main pulse current integrated value calculating and storing device 22, a reference main pulse current integrated value storing device 23 and a plate thickness calculating device 24 for calculating the plate thickness change rate by these current integrated values are installed as plate thickness change detecting means. That is, while according to the first embodiment, the input energy amount for machining is determined by counting pulses, according to the second embodiment, it is calculated using the main pulse current integrated value.

In the main pulse current integrated value calculating and storing device 22, during a time interval between signals output every machining distance Δx set by the machining distance calculating device 13, the value of discharge current (main pulse current) detected by the current detecting circuit 11 is integrated and the integrated value is outputted to the plate thickness calculating device 24. The reference main pulse current integrated value storing device 23 stores the corresponding integrated value for the reference plate thickness Hs, and the plate thickness calculating device 24 calculates the plate thickness change rate β using the reference integrated value and the integrated value outputted from the main pulse current integrated value calculating and storing device 22. Thus, the plate thickness calculating device 24 differs from the plate thickness calculating device 16 in the first embodiment in that the plate thickness change rate P is calculated using the current integrated value.

That is, in Equation (1) and Equation (2) mentioned above, Equation (2) is still valid when P designates an integrated value of discharge current (main pulse current) and w1 designates a machining amount per unit amount of discharge current (main pulse current). Further, w1 and g in Equation (2) are values substantially determined by materials of the workpiece and the wire electrode and are constant. As a result, when an integrated value of discharge current (main pulse current) before a change of plate thickness is designated by P(n), and an integrated value after the change is designated by P(n+1), as mentioned above, the following relationship is established.

$$\beta \ = \ H(n+1)/H(n) \ = \ P(n+1)/P(n)$$

The plate thickness change rate β in respect of the reference plate thickness Hs is expressed as follows.

$$\beta \ = \ H/Hs \ = \ P/P(s)$$

Hence, according to the second embodiment, after each set machining distance Δx, the plate thickness change rate β relative to the reference plate thickness Hs is calculated by the plate thickness calculating device 24 from the integrated value P of discharge current (main pulse current) during the time period which is integrated by the main pulse current integrated value calculating and storing device 22, the reference plate thickness Hs stored to the reference main pulse current integrated value storing device 23 and the integrated value P(s) of discharge current (main pulse current) in machining the portion Δx. Based on the plate thickness change rate β, similar to the first embodiment, the discharge pause time control device 17 calculates the pause time period Toff optimum to the plate thickness of the workpiece 5, by multiplying the pause time period Toff(s) in machining the reference plate thickness Hs by the reciprocal number of the plate thickness change rate β and outputs it to the detection voltage generator 2.

<Third Embodiment>

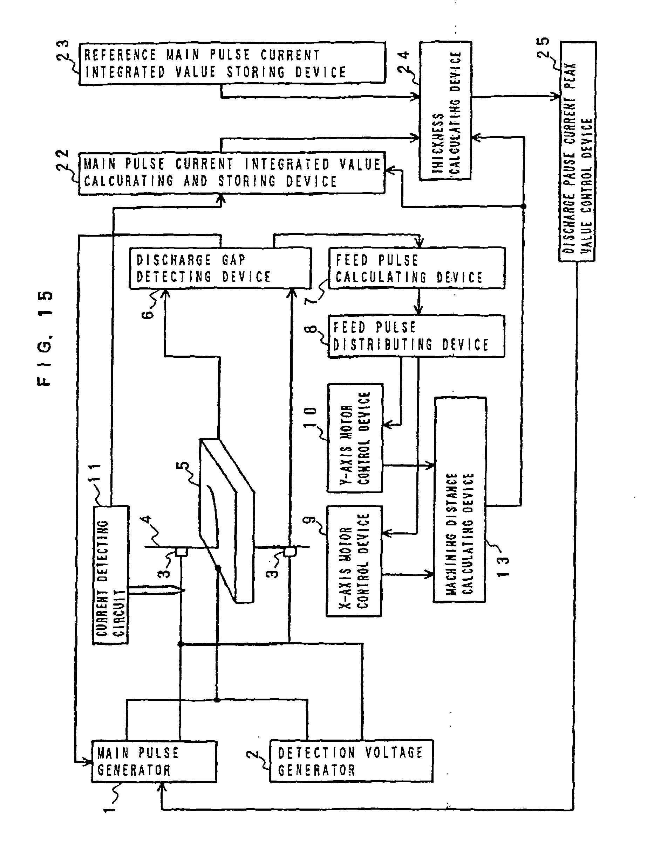

Fig. 15 shows a third embodiment of the invention, in which parts the same as those of Fig. 14 have the same reference signs in place of the discharge pause time control device 17, used as machining condition adjusting means in the second embodiment, a discharge pulse current peak value control device 25 is provided, and a current peak value Ip of discharge pulse calculated by the discharge pulse current peak value control device 25 is outputted to the main pulse generator 1. Further, the current peak value Ip is determined by main pulse voltage applied from the main pulse generator 1 to the gap between the wire electrode 4 and the workpiece 5 and the main pulse voltage is switched by the calculated current peak value.
The third embodiment assumes a servo feed in which the machining average voltage stays constant and accordingly, the following conditions may be established.

$$\mathrm{Toff}(n) = \mathrm{Toff}(n+1), \quad \mathrm{Ton}(n) = \mathrm{Ton}(n+1)$$

$$\mathrm{Tw}(n) + \mathrm{Toff}(n) = \mathrm{Tw}(n+1) + \mathrm{Toff}(n+1)$$

Hence, by rearranging Equations (6), (7) and (10) and the above-described conditions, the following relationship is established.

$$\beta = \mathrm{Im}(n+1)/\mathrm{Im}(n) = \mathrm{Ip}(n+1)/\mathrm{Ip}(n) \quad \ldots \quad (16)$$

Accordingly, the following relationship is established.

$$\mathrm{Ip}(n+1) = \beta x(n) \quad \ldots \quad (17)$$

In order to keep the machining current density constant at a change of plate thickness, the main pulse current peak value Ip(n+1) after the change of plate thickness is changed to a value of the main pulse current peak value Ip(n) before change of plate thickness multiplied by the plate thickness change rate β.
Hence, according to the third embodiment, similar to the second embodiment, the plate thickness change rate β in respect of the reference plate thickness Hs is calculated by the plate thickness calculating device 24. Then, in the discharge pulse current peak value control device 25, the main pulse peak value Ips in respect of the previously set reference plate thickness Hs is multiplied by the plate thickness change rate β, and the value is transmitted to the main pulse generator 1. In the main pulse generator 1, the main pulse voltage is changed in accordance with the value and is applied to the gap between the wire electrode 4 and the workpiece 5.

<Fourth Embodiment>

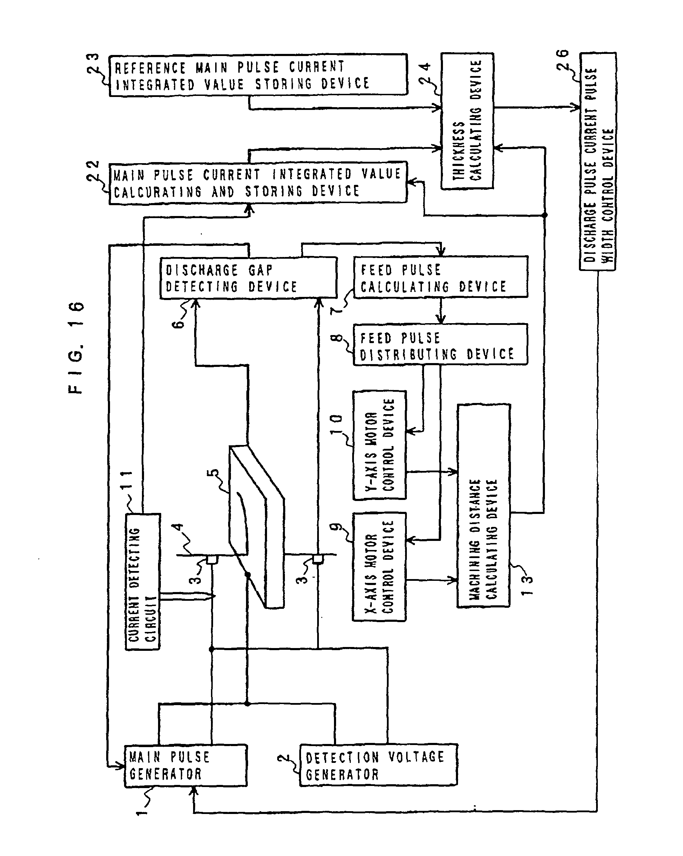

Fig. 16 is a constitution diagram of a fourth embodiment of the invention. What differs from the third embodiment is that a discharge pulse current pulse width control device 26 is installed as machining condition adjusting means in place of the discharge pulse current peak value control device 25 and the current pulse width Ton of main pulses generated from the main pulse generator 1 is changed by an output from the device 26.
Assuming servo feed control in which the machining average voltage stays constant, the following conditions may be established.

$$\mathrm{Toff}(n) = \mathrm{Toff}(n+1), \quad \mathrm{Ip}(n) = \mathrm{Ip}(n+1)$$

$$\mathrm{Tw}(n) + \mathrm{Toff}(n) = \mathrm{Tw}(n+1) + \mathrm{Toff}(n+1)$$

Hence, by rearranging Equations (6), (8) and (10) and the above-described conditions, the following relationship is established.

$$\beta = Im(n+1)/Im(n) = Ton(n+1)/Ton(n) \ \ldots \ (18)$$

Accordingly, the following relationship is established.

$$Ton(n+1) = \beta x(n) \ \ldots \ (19)$$

As a result, in order to keep the machining current density constant at a change of plate thickness, the pulse width Ton(n+1) of main pulse current after change of plate thickness is changed to a value of the pulse width Ton(n) of main pulse current before the change of plate thickness multiplied by the plate thickness change rate β.

Hence, according to the fourth embodiment, similar to the third embodiment, the plate thickness change rate P in respect of the reference plate thickness Hs is calculated by the plate thickness calculating device 24, the pulse width Ton(s) of main pulse current in respect of the previously set reference plate thickness Hs is multiplied by the plate thickness change rate β by the discharge pulse current pulse width control device 26 and the value is transmitted to the main pulse generator 1. The main pulse generator 1 changes the main pulse application time period in accordance with the received value, and applies it to the gap between the wire electrode 4 and the workpiece 5.

<Fifth Embodiment>

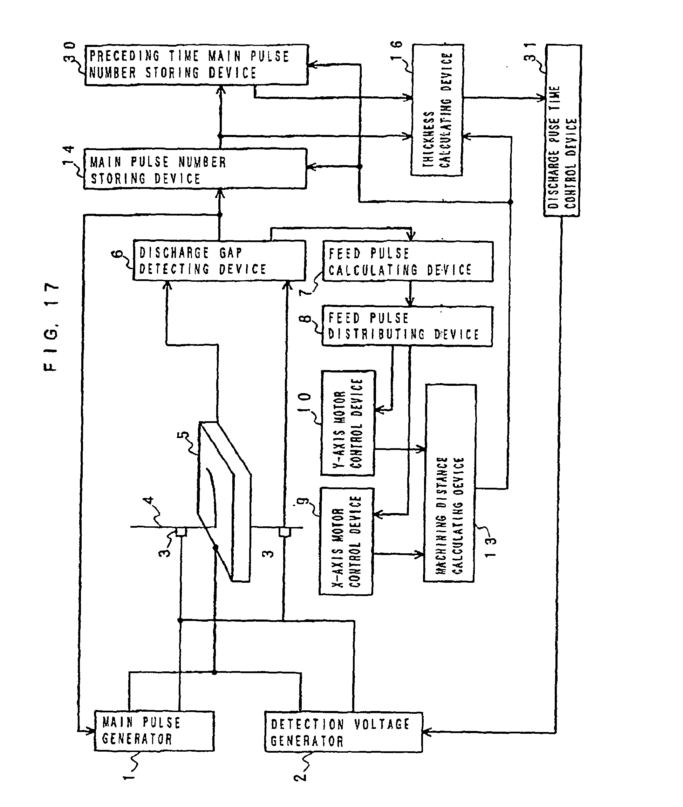

Fig. 17 is a constitution diagram of a fifth embodiment of the invention. In the previously described embodiments, the plate thickness change rate β in respect of the reference plate thickness H(s) is calculated and by the discharge pause time period, the discharge pulse current peak value or the discharge pulse current pulse width in respect of machining of the reference plate thickness H(s) and the plate thickness change rate β, the discharge pause time period, the discharge pulse current peak value or the discharge pulse current pulse width are controlled such that the machining current density remains unchanged. According to the fifth embodiment, each time the set machining distance Δx is travelled, the plate thickness change rate β of plate thickness during machining of Δx at a preceding time to plate thickness during machining of Δx at current time, is calculated, and the discharge pause time period Toff applied in the preceding △x is multiplied by the reciprocal number of the plate thickness change rate to thereby calculate a new discharge pause time period.

That is, as shown by Equation (15), when the pause time period Toff(n) before the change of plate thickness is multiplied by 1/β, the machining current density remains unchanged after the change of plate thickness.

Thus, in place of the reference main pulse number storing device 15 of the fourth embodiment, a preceding time main pulse number storing device 30 is provided. Otherwise, the constitution remains the same as Fig. 13. At each progress of machining of the set machining distance Δx, by a signal outputted from the machining distance calculating device 13, the main pulse number (number of times of discharge) P(n+1) counted by the main pulse number storing device 14 during the Δx just completed and the main pulse number P(n) generated during the preceding Δx, stored in the previous time main pulse number storing device 30, are inputted to the plate thickness calculating device 16. The previous time main pulse number storing device 30 is then updated with main pulse number P(n+1) counted by the main pulse number storing device 14. Further, the plate thickness calculating device 16 calculates the plate thickness change rate β=P(n+1)/P(n) (=H(n+1)/ H(n)) by the main pulse number P(n) at the preceding time and the main pulse number P (n+1) at the current time and outputs it to the discharge pause time control device 31 as machining condition adjusting means. The discharge pause time control device 31 multiplies the existing pause time period Toff(n) by 1/β to thereby calculate the new pause time period Toff(n+1) as shown by Equation (15), and outputs it to the detection voltage generator 2. (Incidentally, while, according to the first embodiment of Fig. 13, the pause time period Toff in respect of the reference plate thickness is multiplied by the reciprocal number of the plate thickness change rate β to thereby calculate the pause time period, according to the fifth embodiment, the pause time period which has been calculated last is multiplied by the reciprocal number of the plate thickness change rate to thereby calculate and update the pause time period; this is the point of difference between the discharge pause time control devices 17 and 31). The detection voltage generator 2 applies the pause time period Toff(n+1) to the cycle of applying detection voltage to the gap between the workpiece 5 and the wire electrode 4.

<Sixth Embodiment>

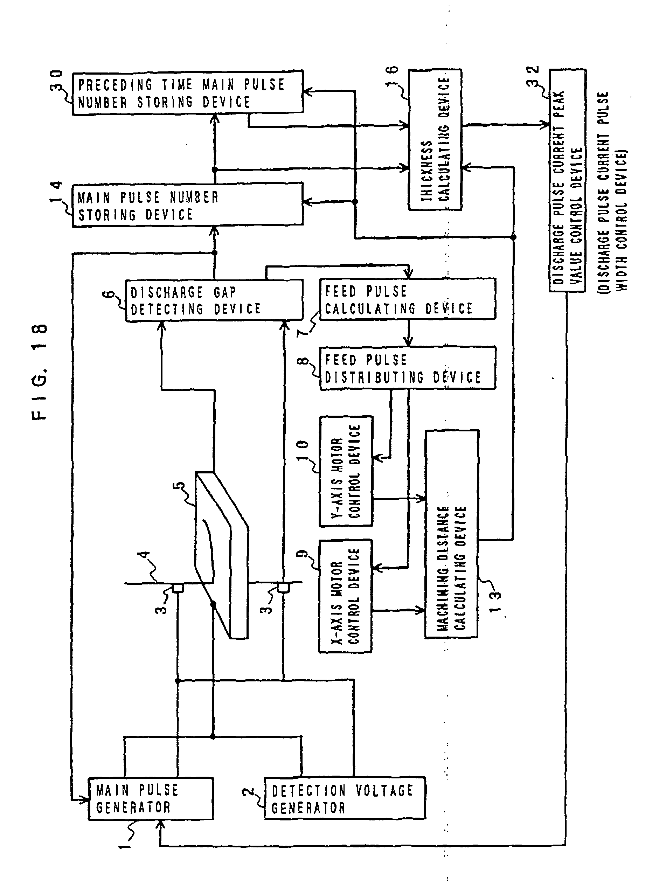

Fig. 18 is a constitution diagram of a sixth embodiment of the invention, which differs from the fifth embodiment of Fig. 17 in that a discharge pulse current peak value control device 32 is installed in place of the discharge pause time control device 31 as machining condition adjusting means and a peak value of discharge pulse current calculated by the device 32 is outputted to the main pulse generator 1. Otherwise, the constitution is the same as in Fig. 17.

Based on the plate thickness change rate $\beta$ calculated by the plate thickness calculating device 16, as shown by Equation (17), a value of the current peak value Ip(n) of discharge pulses outputted during machining the preceding distance $\triangle x$ multiplied by the plate thickness change rate $\beta$ is outputted to the main pulse generator 1 as the current peak value Ip(n+1) and in machining of the next distance $\Delta x$, the machining is carried out by discharge current of the current peak value Ip(n+1).

According to the sixth embodiment, a change in the plate thickness is detected by the plate thickness calculating device 16 and the current peak value of discharge pulses is changed based on the plate thickness change rate $\beta$. Accordingly, a successive plate thickness change rate is calculated by the plate thickness calculating device 16 using the numbers of main pulse numbers in machining each distance $\Delta x$ before and after a change of the current peak value. An energy amount per shot of main pulses (discharge pulse) varies and accordingly, an amount of machining per shot differs and accordingly, an accurate plate thickness change rate cannot be calculated. Therefore, when the plate thickness changes rapidly, there arises a phenomenon in which current peak values after the change of plate thickness oscillate, and the machining accuracy is more or less deteriorated in comparison with those of other embodiments. However, when the plate thickness gradually changes, even by machining according to the sixth embodiment, the current peak value is controlled sufficiently in correspondence with the change in the plate thickness and the machining speed can be promoted and a dispersion in the machining groove width can be minimised.

In place of the discharge pulse current peak value control device 32 of the sixth embodiment, a discharge pulse current pulse width control device may be used and the pulse width of main pulse outputted from the main pulse generator may be controlled as in the fourth embodiment shown in Fig. 16.

<Seventh Embodiment>

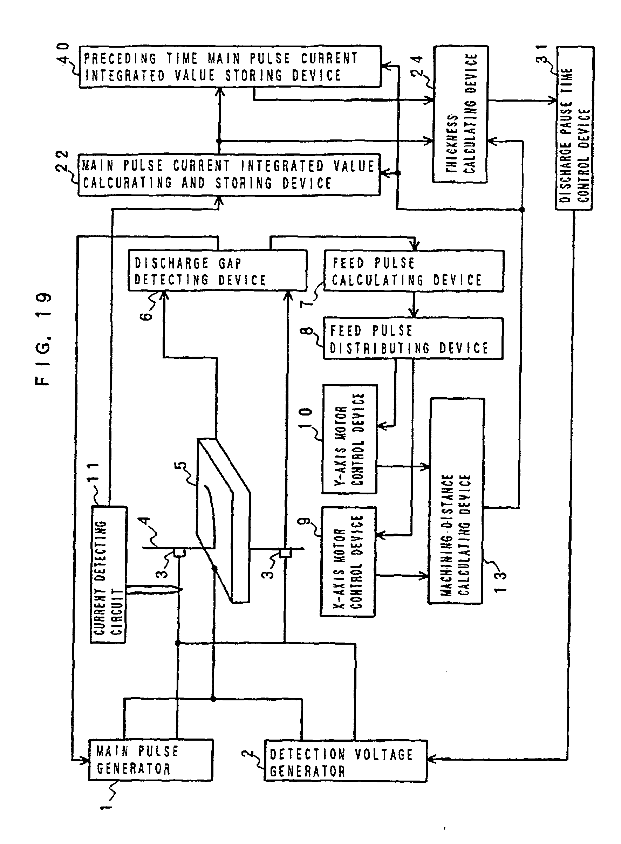

In a seventh embodiment shown in Fig. 19, similar to the second embodiment shown in Fig. 14, the discharge pause time period is controlled by the plate thickness and parts the same as those of Fig. 14 have the same reference signs. What differs is that in the plate thickness change detecting means, the change in the plate thickness is not calculated based on the reference main pulse current integrated value but by a change in the main pulse current integrated value before and after completing each distance $\Delta x$. For that purpose, in place of the reference main pulse current integrated value storing device of Fig. 14, a preceding time main pulse current integrated value storing device 40 is provided. Moreover, a discharge pause time control device 31 is used which calculates discharge pause time period by multiplying the discharge pause time period used for the preceding distance Ax by the reciprocal number of the plate thickness change rate.

The machining distance calculating device 13 outputs a signal at each completion of the set machining distance $\Delta x$. The main pulse current integrated value calculating and storing device 22 calculates an integrated value of discharge current (main pulse current) detected by the current detecting circuit since the last such signal. When a signal is outputted from the machining distance calculating device 13, the main pulse current integrated value P(n) and P(n+1) stored in the main pulse current integrated value calculating and storing device 22 and the preceding time main pulse current integrated value storing device 40, are outputted to the plate thickness calculating device 24 and the integrated value P(n+1) stored in the main pulse current integrated value calculating and storing device 22 is used to update storing device 40.

The plate thickness calculating device 24 calculates the plate thickness change rate $\beta$ (=P(n+1)/P(n)) by dividing the integrated value P(n+1) outputted from the main pulse current integrated value calculating and storing device 22 by the integrated value P(n) outputted from the preceding time main pulse current integrated value storing device 40. Based on the plate thickness change rate $\beta$, the discharge pause time control device 31 calculates a new pause time period Toff(n+1) optimum to the plate thickness of the workpiece 5 during the machining by multiplying the existing discharge pause time period Toff(n) by the reciprocal number of the plate thickness change rate $\beta$ and outputs it to the detection voltage generator 2.

The detection voltage generator 2 uses the pause time period Toff(n+1) for subsequent discharge cycles.

<Eighth Embodiment>

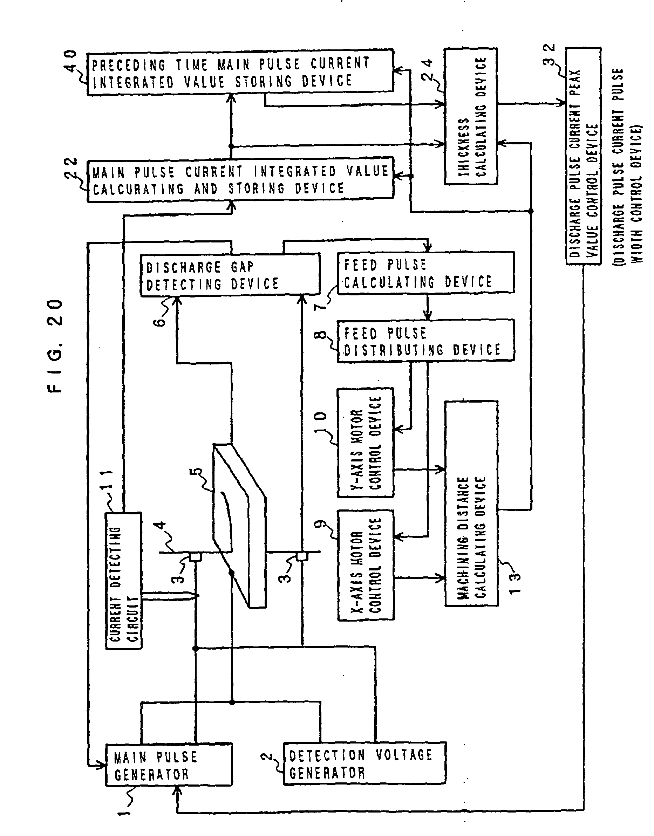

According to this embodiment shown in Fig. 20, the plate thickness change rate is calculated by a change in the main pulse current integrated value during a time period of machining the set distance $\Delta x$ and a peak value of the discharge pulse current is changed in proportion to the calculated plate thickness change rate to thereby provide machining in which the machining current density stays constant. The difference from the seventh embodiment of Fig. 19 is that as machining condition adjusting means, in place of the discharge pause time control device 31, the discharge pulse current peak value control device 32 is provided and an output from the discharge pulse current peak value control device 32 is inputted to the main pulse generator 1. Otherwise, the constitution remains the same as that of the seventh embodiment.

For each movement distance $\Delta x$, the plate thickness change rate $\beta$ (=P(n+1)/P(n)) is calculated by the plate thickness calculating device 24 from the main pulse current integrated value P(n) summed up over the preceding distances $\triangle x$ and main pulse current integrated value P(n+1) during the just-completed $\Delta x$, and a value produced by multiplying the discharge pulse current peak value IP which has been outputted until then by the calculated plate thickness change rate $\beta$, gives the updated discharge pulse current peak value IP.

In place of the discharge pulse current peak value control device 32, a discharge pulse current pulse width control device may be installed and by controlling the pulse width of the main pulse current, the control may be carried out such that the machining current density is maintained constant.

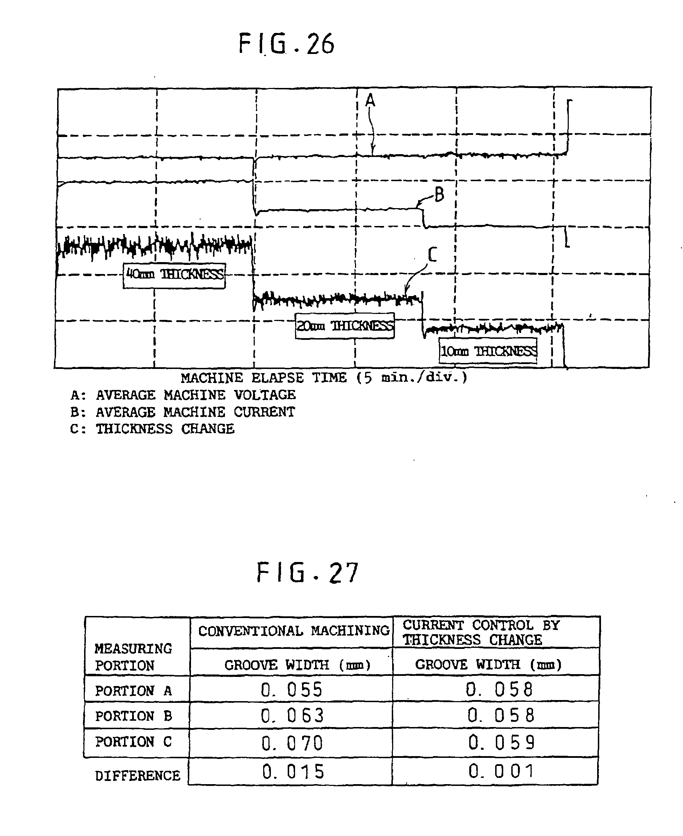

FIG. 26 is a diagram of monitor waveforms when a workpiece shown by FIG. 25 having steps of plate thickness 40 mm, 20 mm and 10 mm is machined by carrying out current control according to the first embodiment mentioned above. As shown in FIG. 26, although the machining average voltage is maintained constant even at a step in the plate thickness, the machining average current is changed so that the machining current density is maintained constant.

Further, FIG. 27 is a diagram showing a result of measurement of machined groove widths when the workpiece of FIG. 25 is machined by the conventional machining method and the machining method according to the first embodiment. As can be seen from FIG. 27, according to the conventional method, the thinner the plate thickness, the larger becomes the groove width and a difference between the groove widths between the case of the plate thickness 40 mm and the case of the plate thickness 10 mm is 0.015 mm. Meanwhile, when the invention is applied, the groove width stays substantially constant even with the change in the plate thickness, causing an error of only 0.001 mm.

As an alternative to the machining condition adjusting means mentioned above, an energy amount inputted from the main pulse generator may be adjusted by adjusting the no load machining time period Tw by adjusting the set voltage in servo feed control by the plate thickness change rate. In this case, although accuracy is more or less deteriorated by presence of secondary discharge since energy is not adjusted directly, the target of preventing wire disconnection can be achieved. That is, in servo control in which feedback control is carried out such that the average machining voltage of the gap between the wire electrode and the workpiece coincides with a set voltage, the set voltage is equal to the average machining voltage Vm. Further, the average machining voltage Vm is represented by the following equation.

$$\text{Vm(n)} = \text{V} \text{ x } \text{Tw(n)/(Tw(n)+Toff)}$$

In the above-described equation, Vm(n) designates the average machining voltage, Tw(n) designates the no load machining time period and Toff designates no load peak voltage which is made constant.

From the above-described equation, it is apparent that the larger the average machining voltage Vm(n), the larger the no load machining time period Tw(n). That is, the average machining voltage Vm(n) and the no load machining time period Tw(n) have a proportional relationship. As a result, the no load machining time period Tw(n) can be adjusted by adjusting the set voltage since the set voltage of servo feed control and the average machining voltage Vm(n) are equal to each other. As a result, the current density can be controlled by adjusting the energy amount inputted from the main pulse generator.

As an example, set voltages in correspondence with the plate thickness change rate in respect of reference plate thickness are previously determined by an evaluation function or a table and in the actual machining operation, the set voltage is changed in correspondence with the plate thickness change rate and the average machining voltage of the gap is adjusted. In this way, the no load machining time period Tw is adjusted and the current density is adjusted. That is, in respect of a reduction in the plate thickness, by setting a high set voltage, the no load machining time period Tw is increased and the pause time period of the main pulse energy is prolonged. Thus, the current density is prevented from rising. In respect of an increase in the plate thickness, by setting a low set voltage, the no load machining time period Tw is reduced and the pause time period of the main pulse energy is shortened, preventing the current density from being reduced.

Further, in servo feed control, feed speed of the wire electrode in respect of the workpiece is controlled by feedback control, such that the set voltage and the average machining voltage coincide with each other and the feed speed is determined in accordance with a deviation between the set voltage and the average machining voltage. Hence, the feed speed in the case of steady-state deviation can be changed by changing the gain for calculating the feed speed in accordance with the deviation between the set voltage and the average machining voltage, that is, the feedback gain in servo feed control. When the feed speed is changed, the no load machining time period Tw is changed, the pause time period of the main pulse energy can be adjusted and the current density can be adjusted.

As an example, the feedback gain of servo feed in correspondence with the plate thickness change rate is previously determined by an evaluation function or a table and in the actual machining operation, the current density is adjusted by adjusting the average machining voltage of the gap by adjusting the above-described gain in correspondence with the plate thickness change rate. That is, in response to a reduction in the plate thickness, the gain is reduced and the feed speed is retarded so that the no load machining time period Tw is increased and the pause time period of the main pulse energy is prolonged. Thus, the current density is presented from rising. In response to an increase in the plate thickness, the gain is increased and the feed speed is accelerated by which the no load machining time period Tw is reduced and the pause time period of the main pulse energy is shortened. Thus, the current density is prevented from dropping.

Further, when machining is controlled not by servo feed control but by feed speed instructed by a program, the instructed feed speed may be adjusted in accordance with the plate thickness change rate. For example, discharge machining is carried out initially at a feed speed instructed by a program, the plate thickness change rate is calculated and the feed speed already set (initially, feed speed instructed by a program) is multiplied by the calculated plate thickness change rate to generate a new feed speed changed in accordance with a change in the plate thickness. For example, when the plate thickness is increased and the plate thickness change rate exceeds "1", the feed speed is increased, the no load machining time period Tw is reduced, the pause time period of the main pulse energy is shortened and the current density is maintained appropriately. Further, when the plate thickness is reduced and the plate thickness change rate becomes smaller than "1", the feed speed is reduced, the no load machining time period Tw is increased and pause time period of the impulse energy is prolonged to maintain the appropriate current density.

Using the invention, the machining conditions are changed automatically to prevent the machining current density from varying and therefore, wire disconnection upon a change of the plate thickness can be prevented. By optimising machining conditions in accordance with the plate thickness the machining enlargement amount (width of the machined groove) can be maintained. Further, in machining the workpiece, the machining conditions are not fixed to ones suitable for a thin portion of the workpiece as in the conventional case and accordingly, the machining speed can be considerably be shortened.

## Claims

1.  A controller of a wire electric discharge machine, comprising:

    a discharge current generator (1) for supplying a pulsating current to a discharge gap between a wire electrode and a workpiece;
    thickness detecting means (16, 24) for calculating a measure of thickness of the workpiece based on an energy amount inputted from said discharge current generator; and
    machining condition adjusting means (17, 25, 26, 31, 32) for adjusting the energy amount inputted from the discharge current generator based on the calculated measure of thickness; **characterised in that**:

    machining distance calculating means (13) are provided for calculating a machining distance;
    thickness detecting means (16, 24) are provided arranged to calculate a thickness change rate of the workpiece based on an energy amount inputted from said discharge current generator during machining by a predetermined distance; and
    said machining condition adjusting means (17, 25, 26, 31, 32) is arranged to adjust said energy amount based on the calculated thickness change rate so that a machining current density is substantially maintained.

2.  A controller of a wire electric discharge machine according to claim 1, wherein said thickness change detecting means (16, 24) calculates the thickness change rate based on a set reference energy amount and the energy amount inputted from said discharge current generator (1) during machining by the predetermined distance in the machining operation.

3.  A controller of a wire electric discharge machine according to claim 1, wherein said thickness change detecting means (16, 24) is provided with means (14, 22) for summing and storing the energy amount inputted from the discharge current generator (1) during machining of the predetermined distance; and means (30, 40) for storing the summed energy amount in machining the predetermined distance at a preceding time; and wherein the thickness change rate of the workpiece is calculated by the summed energy amounts at the preceding time and at a current time at each progress of the machining by the predetermined distance.

4. A controller of a wire electric discharge machine according to claim 1, 2, or 3, wherein said thickness change detecting means (16) calculates the thickness change rate with a pulse number inputted from said discharge current generator (1) as the energy amount.

5. A controller of a wire electric discharge machine according to claim 1, 2, or 3, wherein said thickness change detecting means (24) calculates the thickness change rate with an integrated value of a pulsating current inputted from said discharge current generator (1) as the energy amount.

6. A controller of a wire electric discharge machine according to any one of claims 1 to 5, wherein said machining condition adjusting means (17, 31) adjusts the energy amount inputted from said discharge current generator (1), by adjusting a length of a machining pause time in which application of a voltage to the gap between the wire electrode (4) and the workpiece (5) pauses based on the thickness change rate.

7. A controller of a wire electric discharge machine according to any one of claims 1 to 5, wherein said machining condition adjusting means (25, 32) adjusts the energy amount inputted from said discharge current generator (1) by adjusting a peak value of the pulsating current based on the thickness change rate.

8. A controller of a wire electric discharge machine according to any one of claims 1 to 5, wherein said machine condition adjusting means (26) adjusts the energy amount inputted from said discharge current generator (1) by adjusting a pulse width of the pulsating current based on the thickness change rate.

9. A controller of a wire electric discharge machine according to any one of claims 1 to 5, wherein said machining condition adjusting means adjusts the energy amount inputted from said discharge current generator (1) by adjusting a set voltage in a servo feed control for carrying out a feedback control such that an average machining voltage at the gap between the wire electrode (4) and the workpiece (5) coincides with the set voltage, based on the thickness change rate.

10. A controller of a wire electric discharge machine according to any one of claims 1 to 5, wherein said machining condition adjusting means adjusts the energy amount inputted from said discharge current generator (1) by adjusting a feedback gain in a servo feed control for carrying out a feedback control such that an average machining voltage at the gap between the wire electrode (4) and the workpiece (5) coincides with the set voltage, based on the thickness change rate.

11. A controller of a wire electric discharge machine according to any one of claims 1 to 5, wherein said machining condition adjusting means adjusts the energy amount inputted from said discharge current generator (1) by adjusting a relative feed speed of the wire electrode (4) with respect to the workpiece (5) based on the thickness change rate.

12. A controller of a wire electric discharge machine according to claim 1, further comprising:

    and display controlling means (12) for displaying a relationship between a movement distance or a machining time on a machining path and the detected thickness on a display device.

13. A controller of a wire electric discharge machine according to claim 12, further comprising detecting means (11) for detecting at least one of a machining current, a machining speed and a machining current density in respect of a machining face of the workpiece during the machining operation, wherein said display controlling means (12) displays a relationship between the movement distance or the machining time on the machining path and at least one of the detected machining current, the detected machining speed and the detected machining current density on said display device.

14. A controller of a wire electric discharge machine according to claim 12, wherein the relationship is displayed on a graph with the movement distance or the machining time on the machining path as an abscissa.

15. A controller of a wire electric discharge machine according to claim 1, wherein said thickness detecting means (16) calculates the change rate of the thickness of the workpiece based on a ratio of an inputted energy when the workpiece (5) is machined by a predetermined distance to a reference inputted energy when a reference workpiece having a predetermined thickness is machined by the predetermined distance and calculates the thickness of the workpiece based on the change rate and the thickness of the reference workpiece.

16. A controller of a wire electric discharge machine according to claim 15, wherein the ratio between the inputted, energies is calculated by a ratio between main pulse numbers for carrying out the discharge machining operation.

17. A controller of a wire electric discharge machine according to claim 15, wherein the ratio between the inputted energies is calculated by a ratio between summed values of discharge machining currents.

18. A controller of a wire electric discharge machine according to claim 1, further comprising:

current density detecting means for detecting a machine current density on a machining face of a workpiece during a machining operation; and
display controlling means (12) for displaying a relationship between a movement distance or a machining time on a machining path and the detected machining current density on a display device.

19. A controller of a wire electric discharge machine according to claim 18, wherein the relationship is displayed on a graph with the movement distance or the machining time on the machining path as an abscissa.

20. A controller of a wire electric discharge machine according to claim 18, wherein said current density detecting means calculates the machining current density based on thickness of the workpiece and a machining current during the machining operation.

21. A controller of a wire electric discharge machine according to claim 20, wherein said current density detecting means calculates a change rate of the thickness of the workpiece based on a ratio of an inputted energy when the workpiece is machined by a predetermined distance to a reference inputted energy when a reference workpiece having a predetermined thickness is machined by the predetermined distance and calculates the thickness of the workpiece based on the change rate and the thickness of the reference workpiece.

22. A controller of a wire electric discharge machine according to claim 21, wherein the ratio between the inputted energies is calculated by a ratio between main pulse numbers for carrying out the discharge machining.

23. A controller of a wire electric discharge machine according to claim 21, wherein the ratio between the inputted energies is calculated by a ratio between summed values of the discharge machining currents.

**Patentansprüche**

1. Steuerungsvorrichtung einer elektrischen Drahterosionsmaschine, umfassend:

einen Entladungsstromgenerator (1) zum Bereitstellen eines pulsierenden Stroms an einen Entladungsspalt zwischen einer Drahtelektrode und einem Werkstück;
ein Dickendetektionsmittel (16, 24) zum Berechnen eines Messwerts der Dicke des Werkstücks auf Grundlage einer Energiemenge, die von dem Entladungsstromgenerator zugeführt wird; und
ein Bearbeitungsbedingungseinstellmittel (17, 25, 26, 31, 32) zum Einstellen der Energiemenge, die von dem Entladungsstromgenerator zugeführt wird, auf Grundlage des berechneten Dickenmesswerts; **dadurch gekennzeichnet, dass**:

ein Bearbeitungsstreckenberechnungsmittel (13) zum Berechnen einer Bearbeitungsstrecke vorgesehen ist;
ein Dickendetektionsmittel (16, 24) vorgesehen ist, das dazu ausgebildet ist, auf Grundlage einer Energiemenge, die von dem Entladungsstromgenerator zugeführt wird, eine Dickenveränderungsrate des Werkstücks während der Bearbeitung über eine vorbestimmte Strecke zu berechnen; und
das Bearbeitungsbedingungseinstellmittel (17, 25, 26, 31, 32) dazu ausgebildet ist, die Energiemenge auf Grundlage der berechneten Dickenveränderungsrate einzustellen, derart, dass eine Bearbeitungsstromdichte im Wesentlichen beibehalten wird.

2. Steuerungsvorrichtung einer elektrischen Drahterosionsmaschine nach Anspruch 1, wobei das Dickenveränderungsdetektionsmittel (16, 24) die Dickenveränderungsrate auf Grundlage einer festgelegten Referenzenergiemenge und der Energiemenge berechnet, die während der Bearbeitung über die vorbestimmte Strecke im Bearbeitungsvorgang von dem Entladungsstromgenerator (1) zugeführt wird.

3.  Steuerungsvorrichtung einer elektrischen Drahterosionsmaschine nach Anspruch 1, wobei das Dickenveränderungsdetektionsmittel (16, 24) mit einem Mittel (14, 22) zum Summieren und Speichern der Energiemenge versehen ist, die während der Bearbeitung über die vorbestimmte Strecke von dem Entladungsstromgenerator (1) zugeführt wird; und mit einem Mittel (30, 40) zum Speichern der summierten Energiemenge bei der Bearbeitung über die vorbestimmte Strecke innerhalb einer vorbestimmten Zeitspanne; und wobei die Dickenveränderungsrate des Werkstücks bei jedem Voranschreiten der Bearbeitung über die vorbestimmte Strecke anhand der summierten Energiemengen zu einem vorangehenden Zeitpunkt und zu einem aktuellen Zeitpunkt berechnet wird.

4.  Steuerungsvorrichtung einer elektrischen Drahterosionsmaschine nach Anspruch 1, 2 oder 3, wobei das Dickenveränderungsdetektionsmittel (16) die Dickenveränderungsrate mit einer Impulszahl, die von dem Entladungsstromgenerator (1) zugeführt wird, als Energiemenge berechnet.

5.  Steuerungsvorrichtung einer elektrischen Drahterosionsmaschine nach Anspruch 1, 2 oder 3, wobei das Dickenveränderungsdetektionsmittel (16) die Dickenveränderungsrate mit einem integrierten Wert eines pulsierenden Stroms, der von dem Entladungsstromgenerator (1) zugeführt wird, als Energiemenge berechnet.

6.  Steuerungsvorrichtung einer elektrischen Drahterosionsmaschine nach einem der Ansprüche 1 bis 5, wobei das Bearbeitungsbedingungseinstellmittel (17, 31) die Energiemenge, die von dem Entladungsstromgenerator (1) zugeführt wird, durch Einstellen einer Länge einer Bearbeitungsaussetzungszeitspanne auf Grundlage der Dickenveränderungsrate einstellt, während der das Anlegen einer Spannung an den Spalt zwischen der Drahtelektrode (4) und dem Werkstück (5) aussetzt.

7.  Steuerungsvorrichtung einer elektrischen Drahterosionsmaschine nach einem der Ansprüche 1 bis 5, wobei das Bearbeitungsbedingungseinstellmittel (25, 32) die Energiemenge, die von dem Entladungsstromgenerator (1) zugeführt wird, durch Einstellen eines Spitzenwerts des pulsierenden Stroms auf Grundlage der Dickenveränderungsrate einstellt.

8.  Steuerungsvorrichtung einer elektrischen Drahterosionsmaschine nach einem der Ansprüche 1 bis 5, wobei das Bearbeitungsbedingungseinstellmittel (26) die Energiemenge, die von dem Entladungsstromgenerator (1) zugeführt wird, durch Einstellen einer Impulsbreite des pulsierenden Stroms auf Grundlage der Dickenveränderungsrate einstellt.

9.  Steuerungsvorrichtung einer elektrischen Drahterosionsmaschine nach einem der Ansprüche 1 bis 5, wobei das Bearbeitungsbedingungseinstellmittel die Energiemenge, die von dem Entladungsstromgenerator (1) zugeführt wird, durch Einstellen einer festgelegten Spannung in einer Vorschubregelsteuerung zum Ausführen einer Regelung dahingehend, dass eine mittlere Bearbeitungsspannung an dem Spalt zwischen der Drahtelektrode (4) und dem Werkstück (5) mit der festgelegten Spannung übereinstimmt, auf Grundlage der Dickenveränderungsrate einstellt.

10. Steuerungsvorrichtung einer elektrischen Drahterosionsmaschine nach einem der Ansprüche 1 bis 5, wobei das Bearbeitungsbedingungseinstellmittel die Energiemenge, die von dem Entladungsstromgenerator (1) zugeführt wird, durch Einstellen einer Verstärkung in einer Vorschubregelsteuerung zum Ausführen einer Regelung dahingehend, dass eine mittlere Bearbeitungsspannung an dem Spalt zwischen der Drahtelektrode (4) und dem Werkstück (5) mit der festgelegten Spannung übereinstimmt, auf Grundlage der Dickenveränderungsrate einstellt.

11. Steuerungsvorrichtung einer elektrischen Drahterosionsmaschine nach einem der Ansprüche 1 bis 5, wobei das Bearbeitungsbedingungseinstellmittel die Energiemenge, die von dem Entladungsstromgenerator (1) zugeführt wird, durch Einstellen einer relativen Vorschubgeschwindigkeit der Drahtelektrode (4) in Bezug auf das Werkstück (5) auf Grundlage der Dickenveränderungsrate einstellt.

12. Steuerungsvorrichtung einer elektrischen Drahterosionsmaschine nach Anspruch 1, ferner umfassend:

    ein Anzeigesteuerungsmittel (12) zum Anzeigen eines Verhältnisses zwischen einer Bewegungsstrecke oder einer Bearbeitungszeit an einem Bearbeitungsweg und der detektierten Dicke auf einer Anzeigeeinrichtung.

**13.** Steuerungsvorrichtung einer elektrischen Drahterosionsmaschine nach Anspruch 12, ferner umfassend:

ein Detektionsmittel (11) zum Detektieren wenigstens eines Bearbeitungsstroms, einer Bearbeitungsgeschwindigkeit, oder einer Bearbeitungsstromdichte in Bezug auf eine Bearbeitungsfläche des Werkstücks während des Bearbeitungsvorgangs, wobei das Anzeigesteuerungsmittel (12) ein Verhältnis zwischen der Bewegungsstrecke oder der Bearbeitungszeit am Bearbeitungsweg und wenigstens dem detektierten Bearbeitungsstrom, der detektierten Bearbeitungsgeschwindigkeit oder der detektierten Bearbeitungsstromdichte auf der Anzeigeeinrichtung anzeigt.

**14.** Steuerungsvorrichtung einer elektrischen Drahterosionsmaschine nach Anspruch 12, wobei das Verhältnis an einem Graphen angezeigt wird, wobei die Bewegungsstrecke oder die Bearbeitungszeit am Bearbeitungsweg als eine Abszisse dargestellt sind.

**15.** Steuerungsvorrichtung einer elektrischen Drahterosionsmaschine nach Anspruch 1, wobei das Dickendetektionsmittel (16) die Veränderungsrate der Dicke des Werkstücks auf Grundlage eines Verhältnisses einer zugeführten Energie, wenn das Werkstück (5) über eine bestimmte Strecke bearbeitet wird, und einer Referenzzuführenergie berechnet, wenn ein Referenzwerkstück mit einer vorbestimmten Dicke über die vorbestimmte Strecke bearbeitet wird, und die Dicke des Werkstücks auf Grundlage der Veränderungsrate und der Dicke des Referenzwerkstücks berechnet.

**16.** Steuerungsvorrichtung einer elektrischen Drahterosionsmaschine nach Anspruch 15, wobei das Verhältnis zwischen den Zuführenergien anhand eines Verhältnisses zwischen Hauptimpulszahlen zum Ausführen des Erosionsbearbeitungsvorgangs berechnet wird.

**17.** Steuerungsvorrichtung einer elektrischen Drahterosionsmaschine nach Anspruch 15, wobei das Verhältnis zwischen den Zuführenergien anhand eines Verhältnisses zwischen summierten Werten von Erosionsbearbeitungsströmen berechnet wird.

**18.** Steuerungsvorrichtung einer elektrischen Drahterosionsmaschine nach Anspruch 1, ferner umfassend:

ein Stromdichtedetektionsmittel zum Detektieren einer Bearbeitungsstromdichte an einer Bearbeitungsfläche eines Werkstücks während eines Bearbeitungsvorgangs; und
ein Anzeigesteuerungsmittel (12) zum Anzeigen eines Verhältnisses zwischen einer Bewegungsstrecke oder einer Bearbeitungszeit an einem Bearbeitungsweg und der detektierten Bearbeitungsstromdichte auf einer Anzeigeeinrichtung.

**19.** Steuerungsvorrichtung einer elektrischen Drahterosionsmaschine nach Anspruch 18, wobei das Verhältnis an einem Graphen angezeigt wird, wobei die Bewegungsstrecke oder die Bearbeitungszeit am Bearbeitungsweg als eine Abszisse dargestellt sind.

**20.** Steuerungsvorrichtung einer elektrischen Drahterosionsmaschine nach Anspruch 18, wobei das Stromdichtedetektionsmittel die Bearbeitungsstromdichte auf Grundlage der Dicke des Werkstücks und eines Bearbeitungsstroms während des Bearbeitungsvorgangs berechnet.

**21.** Steuerungsvorrichtung einer elektrischen Drahterosionsmaschine nach Anspruch 20, wobei das Stromdichtedetektionsmittel eine Veränderungsrate der Dicke des Werkstücks auf Grundlage eines Verhältnisses einer zugeführten Energie, wenn das Werkstück über eine bestimmte Strecke bearbeitet wird, und einer Referenzzuführenergie berechnet, wenn ein Referenzwerkstück mit einer vorbestimmten Dicke über die vorbestimmte Strecke bearbeitet wird, und die Dicke des Werkstücks auf Grundlage der Veränderungsrate und der Dicke des Referenzwerkstücks berechnet.

**22.** Steuerungsvorrichtung einer elektrischen Drahterosionsmaschine nach Anspruch 21, wobei das Verhältnis zwischen den Zuführenergien anhand eines Verhältnisses zwischen Hauptimpulszahlen zum Durchführen der Erosionsbearbeitung berechnet wird.

**23.** Steuerungsvorrichtung einer elektrischen Drahterosionsmaschine nach Anspruch 21, wobei das Verhältnis zwischen den Zuführenergien anhand eines Verhältnisses zwischen summierten Werten von Erosionsbearbeitungsströmen berechnet wird.

**EP 0 934 791 B1**

**Revendications**

**1.** Un système de contrôle d'une machine d'usinage par électroérosion par fil comprenant :

un générateur de courant de décharge (1) destiné à fournir un courant pulsé à un espace de décharge situé entre un fil-électrode et une pièce,
des moyens de détection d'épaisseur (16, 24) pour calculer une mesure d'épaisseur de la pièce en se basant sur une quantité d'énergie introduite à partir dudit générateur de courant de décharge et
des moyens de réglage des conditions d'usinage (17,25,26,31,32)pour régler la quantité d'énergie introduite à partir du générateur de courant de décharge en se basant sur la mesure calculée de l'épaisseur

**caractérisé en ce que :**

le moyen de calcul de la distance d'usinage (13) est prévu pour calculer une distance d'usinage,
les moyens de détection d'épaisseur (16, 24) sont prévus, agencés pour calculer un taux de changement de l'épaisseur de la pièce, en se basant sur une quantité d'énergie introduite à partir dudit générateur de courant de décharge, pendant l'usinage sur une distance prédéterminée et
lesdits moyens de réglage des conditions d'usinage (17, 25, 26, 31, 32) sont agencés pour ajuster ladite quantité d'énergie en se basant sur le taux de changement de l'épaisseur calculé de manière à maintenir pour l'essentiel une densité de courant d'usinage.

**2.** Un système de contrôle d'une machine d'usinage par électroérosion par fil conformément à la revendication 1 dans lequel lesdits moyens de détection de changement d'épaisseur (16, 24) calculent le taux de changement d'épaisseur en se basant sur une quantité d'énergie de référence définie et sur la quantité d'énergie introduite depuis ledit générateur de courant de décharge (1) pendant l'usinage sur la distance prédéterminée dans l'opération d'usinage.

**3.** Un système de contrôle d'une machine d'usinage par électroérosion par fil conformément à la revendication 1 dans lequel lesdits moyens de détection de changement d'épaisseur (16, 24) sont prévus avec les moyens (14, 22) pour totaliser et mémoriser la quantité d'énergie introduite depuis le générateur de courant de décharge (1) pendant l'usinage de la distance prédéterminée et des moyens (30, 40) pour mémoriser la quantité d'énergie totalisée dans l'usinage de la distance prédéterminée à un moment précédent et dans lequel le taux de changement d'épaisseur de la pièce est calculé par les quantités d'énergie totalisées au moment précédent et à un moment réel à chaque progression de l'usinage sur la distance prédéterminée.

**4.** Un système de contrôle d'une machine d'usinage par électroérosion par fil conformément à la revendication 1, 2 ou 3 dans lequel ledit moyen de détection de changement d'épaisseur (16) calcule le taux de changement d'épaisseur avec un nombre d'impulsions introduit depuis ledit générateur de courant de décharge (1) en tant que quantité d'énergie.

**5.** Un système de contrôle d'une machine d'usinage par électroérosion par fil conformément à la revendication 1, 2 ou 3 dans lequel ledit moyen de détection de changement d'épaisseur (24) calcule le taux de changement d'épaisseur avec une valeur intégrée d'un courant pulsé introduit depuis ledit générateur de courant de décharge (1) en tant que quantité d'énergie.

**6.** Un système de contrôle d'une machine d'usinage par électroérosion par fil conformément à l'une des revendications 1 à 5 dans lequel lesdits moyens de réglage des conditions d'usinage (17, 31) ajustent la quantité d'énergie introduite depuis ledit générateur de courant de décharge (1) en ajustant une longueur de temps de pause d'usinage dans lequel l'application d'une tension à l'espace situé entre le fil-électrode (4) et la pièce (5) marque un temps de pause en se basant sur le taux de changement d'épaisseur.

**7.** Un système de contrôle d'une machine d'usinage par électroérosion par fil conformément à l'une des revendications 1 à 5 dans lequel lesdits moyens de réglage des conditions d'usinage (25, 32) ajustent la quantité d'énergie introduite depuis ledit générateur de courant de décharge (1) en ajustant une valeur maximale du courant pulsé en se basant sur le taux de changement d'épaisseur.

**8.** Un système de contrôle d'une machine d'usinage par électroérosion par fil conformément à l'une des revendications 1 à 5 dans lequel ledit moyen de réglage des conditions d'usinage (26) ajuste la quantité d'énergie introduite depuis ledit générateur de courant de décharge (1) en ajustant une largeur d'impulsion du courant pulsé en se basant sur

**24**

le taux de changement d'épaisseur.

9.  Un système de contrôle d'une machine d'usinage par électroérosion par fil conformément à l'une des revendications 1 à 5 dans lequel ledit moyen de réglage des conditions d'usinage ajuste la quantité d'énergie introduite depuis ledit générateur de courant de décharge (1) en ajustant une tension définie dans une servocommande d'avance pour réaliser un asservissement de manière à ce qu'une tension d'usinage moyenne à l'espace situé entre le fil-électrode (4) et la pièce (5) coïncide avec la tension définie, en se bsant sur le taux de changement de l'épaisseur.

10. Un système de contrôle d'une machine d'usinage par électroérosion par fil conformément à l'une des revendications 1 à 5 dans lequel ledit moyen d'ajustage des conditions d'usinage ajuste la quantité d'énergie introduite depuis ledit générateur de courant de décharge (1) en ajustant un gain d'asservissement dans une servocommande d'avance pour réaliser un asservissement de manière à ce qu'une tension d'usinage moyenne à l'espace situé entre le fil-électrode (4) et la pièce (5) coïncide avec la tension définie, en se basant sur le taux de changement de l'épaisseur.

11. Un système de contrôle d'une machine d'usinage par électroérosion par fil conformément à l'une des revendications 1 à 5 dans lequel ledit moyen d'ajustage des conditions d'usinage ajuste la quantité d'énergie introduite depuis ledit générateur de courant de décharge (1) en ajustant une vitesse d'avance relative du fil-électrode (4) par rapport à la pièce (5), en se basant sur le taux de changement de l'épaisseur.

12. Un système de contrôle d'une machine d'usinage par électroérosion par fil conformément à la revendication 1 comprenant en plus :

    un moyen de contrôle par affichage (12) pour afficher une relation entre une distance de course ou un temps d'usinage sur une trajectoire d'usinage et l'épaisseur détectée sur un dispositif d'affichage.

13. Un système de contrôle d'une machine d'usinage par électroérosion par fil conformément à la revendication 12, comprenant en plus un moyen de détection (11) pour détecter au moins un courant d'usinage, une vitesse d'usinage et une densité de courant d'usinage par rapport à une face d'usinage de la pièce pendant l'opération d'usinage, dans lequel ledit moyen de contrôle par affichage (12) affiche une relation entre la distance de course ou le temps d'usinage sur la trajectoire d'usinage et au moins un courant d'usinage détecté, la vitesse d'usinage détectée et la densité de courant d'usinage détectée sur ledit dispositif d'affichage.

14. Un système de contrôle d'une machine d'usinage par électroérosion par fil conformément à la revendication 12, dans lequel la relation est affichée sur un graphique avec la distance de course ou le temps d'usinage sur la trajectoire d'usinage en tant qu'abscisse.

15. Un système de contrôle d'une machine d'usinage par électroérosion par fil conformément à la revendication 1, dans lequel ledit moyen de détection d'épaisseur (16) calcule le taux de changement de l'épaisseur de la pièce se basant sur un rapport entre une énergie introduite lorsque la pièce (5) est usinée sur une distance prédéterminée et une énergie introduite de référence lorsqu'une pièce de référence ayant une épaisseur prédéterminée est usinée sur la distance prédéterminée et calcule l'épaisseur de la pièce en se basant sur le taux de changement et l'épaisseur de la pièce de référence.

16. Un système de contrôle d'une machine d'usinage par électroérosion par fil conformément à la revendication 15, dans lequel le rapport entre les énergies introduites est calculé par un rapport existant entre les nombres d'impulsions principaux pour effectuer l'opération d'usinage par électroérosion.

17. Un système de contrôle d'une machine d'usinage par électroérosion par fil conformément à la revendication 15, dans lequel le rapport entre les énergies introduites est calculé par un rapport existant entre les valeurs totalisées des courants de décharge d'usinage.

18. Un système de contrôle d'une machine d'usinage par électroérosion par fil conformément à la revendication 1, comprenant en plus :

    un moyen de détection de densité de courant pour détecter une densité de courant d'usinage sur une face d'usinage d'une pièce pendant une opération d'usinage et
    un moyen de contrôle par affichage (12) pour afficher une relation entre une distance de course ou un temps d'usinage sur une trajectoire d'usinage et la densité de courant d'usinage détectée sur un dispositif d'affichage.

**19.** Un système de contrôle d'une machine d'usinage par électroérosion par fil conformément à la revendication 18, dans lequel la relation est affichée sur un graphique avec la distance de course ou le temps d'usinage sur la trajectoire d'usinage en tant qu'abscisse.

**20.** Un système de contrôle d'une machine d'usinage par électroérosion par fil conformément à la revendication 18, dans lequel ledit moyen de détection de densité de courant calcule la densité de courant d'usinage en se basant sur l'épaisseur de la pièce et un courant d'usinage pendant l'opération d'usinage.

**21.** Un système de contrôle d'une machine d'usinage par électroérosion par fil conformément à la revendication 20, dans lequel ledit moyen de détection de densité de courant calcule un taux de changement de l'épaisseur de la pièce en se basant sur un rapport entre une énergie introduite lorsque la pièce est usinée sur une distance prédéterminée et une énergie introduite de référence lorsqu'une pièce de référence ayant une épaisseur prédéterminée est usinée sur une distance prédéterminée et calcule l'épaisseur de la pièce en se basant sur le taux de changement et l'épaisseur de la pièce de référence.

**22.** Un système de contrôle d'une machine d'usinage par électroérosion par fil conformément à la revendication 21, dans lequel le rapport entre les énergies introduites est calculé par un rapport existant entre les nombres d'impulsions principaux pour effectuer l'usinage par électroérosion.

**23.** Un système de contrôle d'une machine d'usinage par électroérosion par fil conformément à la revendication 21, dans lequel le rapport entre les énergies introduites est calculé par un rapport existant entre les valeurs totalisées des courants de décharge d'usinage.

FIG. 1

- 15 REFERENCE PULSE NUMBER STORING DEVICE
- 16 THICKNESS CALCULATING DEVICE
- 14 MAIN PULSE NUMBER STORING DEVICE
- 12 DISPLAY DEVICE
- 6 DISCHARGE GAP DETECTING DEVICE
- 7 FEED PULSE CALCULATING DEVICE
- 8 FEED PULSE DISTRIBUTING DEVICE
- 10 Y-AXIS MOTOR CONTROL DEVICE
- 9 X-AXIS MOTOR CONTROL DEVICE
- 13 MACHINING DISTANCE CALCULATING DEVICE
- 11 CURRENT DETECTING CIRCUIT
- 5
- 4
- 3
- 1 MAIN PULSE GENERATOR
- 2 DETECTION VOLTAGE GENERATOR

27

F I G. 2

F I G. 3

| Hs | | | |
|---|---|---|---|
| Ps | | | |
| P 1 | V 1 | t 1 | I 1 |
| P 2 | V 2 | t 2 | I 2 |
| P 3 | V 3 | t 3 | I 3 |
| P 4 | V 4 | t 4 | I 4 |
| ⋮ | ⋮ | ⋮ | ⋮ |
| P i | V i | t i | I i |
| ⋮ | ⋮ | ⋮ | ⋮ |
| P n | V n | t n | I n |

# FIG. 4

F I G. 5

FIG. 6

START

$i \leftarrow 1$ — B 1

READ H s, P s — B 2

B 1 6 — SWITCH ABSCISSA? — Yes / No

B 3 — $i > n$ — Yes / No

B 4 — IS ABSCISSA DISTANCE? — No / Yes

B 5 — READ P i, t i, V i, l i

B 6 — $H i \leftarrow H s \times P i / P s$

B 7 — $D i \leftarrow l i / H i$

B 8 — DISPLAY H i, D i, V i, l i ON SCREEN WITH ABSCISSA AS TIME

B 9 — $i \leftarrow i + 1$

B 1 1 — READ P i, V i, l i

B 1 2 — $H i \leftarrow H s \times P i / P s$

B 1 3 — $D i \leftarrow l i / H i$

B 1 4 — DISPLAY H i, D i, V i, l i ON SCREEN WITH ABSCISSA AS DISTANCE

B 1 5 — $i \leftarrow i + 1$

B 1 0 — SWITCH SCREEN? — No / Yes

END

FIG. 7

FIG. 8

F I G. 9

ON : OFF

GATE

V

I p

F I G. 1 0

15  15  15

40

20

10

10

## FIG.11

MACHINING ELAPSE TIME (5 min./div.)

A: AVERAGE MACHINING VOLTAGE
B: AVERAGE MACHINING CURRENT
C: THICKNESS CHANGE

## FIG.12

LOWER
MACHINING
CURRENT BY ABOUT 50%

LOWER
MACHINING
CURRENT BY ABOUT
50%

MACHINING ELAPSE TIME (5 min./div.)

A: AVERAGE MACHINING VOLTAGE
B: AVERAGE MACHINING CURRENT
C: THICKNESS CHANGE

F I G. 1 3

FIG. 14

EP 0 934 791 B1

FIG. 16

EP 0 934 791 B1

FIG. 18

EP 0 934 791 B1

F I G. 19

F I G. 20

EP 0 934 791 B1

42

EP 0 934 791 B1

F I G. 2 1

43

# FIG.22

# FIG.23

MACHINE ELAPSE TIME (5 min./div.)

A: AVERAGE MACHINING VOLTAGE
B: AVERAGE MACHINING CURRENT
C: THICKNESS CHANGE

## FIG.24

MACHINING ELAPSE TIME (5 min./div.)

A: AVERAGE MACHINING VOLTAGE
B: AVERAGE MACHINING CURRENT
C: THICKNESS CHANGE

## FIG.25

## FIG.26

MACHINE ELAPSE TIME (5 min./div.)
A: AVERAGE MACHINE VOLTAGE
B: AVERAGE MACHINE CURRENT
C: THICKNESS CHANGE

## FIG.27

| MEASURING PORTION | CONVENTIONAL MACHINING | CURRENT CONTROL BY THICKNESS CHANGE |
|---|---|---|
| | GROOVE WIDTH (mm) | GROOVE WIDTH (mm) |
| PORTION A | 0.055 | 0.058 |
| PORTION B | 0.063 | 0.058 |
| PORTION C | 0.070 | 0.059 |
| DIFFERENCE | 0.015 | 0.001 |

EP 0 934 791 B1

FIG. 29

EP 0 934 791 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5362936 A